# FASCICULE DE BREVET EUROPEEN

(11) **EP 2 274 235 B1**
(45) Date de publication et mention de la délivrance du brevet: **25.07.2012**
(21) Numéro de dépôt: 09734713.2
(22) Date de dépôt: 26.02.2009
(51) Int. Cl.: C01B 37/00, C01B 39/04

(54) **MATERIAU INORGANIQUE FORME DE PARTICULES SPHERIQUES DE TAILLE SPECIFIQUE ET PRESENTANT DES NANOPARTICULES METALLIQUES PIEGEES DANS UNE MATRICE MESOSTRUCTUREE**
AUS KUGELFÖRMIGEN PARTIKELN VON SPEZIFISCHER GRÖSSE GEFORMTES ANORGANISCHES MATERIAL MIT IN EINER MESOSTRUKTURIERTEN MATRIX ERFASSTEN METALLISCHEN NANOPARTIKELN
INORGANIC MATERIAL FORMED FROM SPHERICAL PARTICLES OF SPECIFIC SIZE AND HAVING METALLIC NANOPARTICLES TRAPPED IN A MESOSTRUCTURED MATRIX

(30) Priorité: 31.03.2008 FR 0801762
(43) Date de publication de la demande: 19.01.2011
(73) Titulaire: IFP Energies nouvelles, 92852 Rueil-Malmaison Cedex (FR)
(72) Inventeur: CHAUMONNOT, Alexandra, F-69008 Lyon (FR); COUPE, Aurélie, F-77186 Noisiel (FR); SANCHEZ, Clément, F-91190 Gif-sur-Yvette (FR); BOISSIERE, Cédric, F-75013 Paris (FR); MARTIN, Michel, F-69006 Lyon (FR)
(86) Numéro de dépôt international: PCT/FR2009/000208
(87) Numéro de publication internationale: WO 2009/130401

(56) Documents cités:
- EP-A- 1 627 853
- WO-A-2006/128988

## Description

La présente invention se rapporte au domaine des matériaux oxydes inorganiques, notamment à ceux contenant des métaux de transition et/ou de terres rares, présentant une porosité organisée et uniforme dans le domaine de la mésoporosité. Elle se rapporte également à la préparation de ces matériaux qui sont obtenus par l'emploi du procédé "EISA" (Evaporation Induced by Self Assembly) dénommé encore procédé d'auto-assemblage induit par évaporation.

### Etat de la technique antérieure

Les nouvelles stratégies de synthèse permettant d'obtenir des matériaux à porosité bien définie dans une très large gamme, allant des matériaux microporeux aux matériaux macroporeux en passant par des matériaux à porosité hiérarchisée, c'est-à-dire ayant des pores de plusieurs tailles, connaissent un très large développement au sein de la communauté scientifique depuis le milieu des années 1990 (G. J. de A. A. Soler-IIIia, C. Sanchez, B. Lebeau, J. Patarin, Chem. Rev., 2002, 102, 4093). On obtient des matériaux dont la taille des pores est contrôlée. En particulier, le développement de méthodes de synthèse dites de "chimie douce" a conduit à l'élaboration de matériaux mésostructurés à basse température par la coexistence en solution aqueuse ou dans des solvants polaires de précurseurs inorganiques avec des agents structurants, généralement des tensioactifs moléculaires ou supramoléculaires, ioniques ou neutres. Le contrôle des interactions électrostatiques ou par liaisons hydrogènes entre les précurseurs inorganiques et l'agent structurant conjointement lié à des réactions d'hydrolyse / condensation du précurseur inorganique conduit à un assemblage coopératif des phases organique et inorganique générant des agrégats micellaires de tensioactifs de taille uniforme et contrôlée au sein d'une matrice inorganique. Ce phénomène d'auto-assemblage coopératif régi, entre autres, par la concentration en agent structurant peut être induit par évaporation progressive d'une solution de réactifs dont la concentration en agent structurant est le plus souvent inférieure à la concentration micellaire critique, ce qui conduit soit à la formation de films mésostructurés dans le cas d'un dépôt sur substrat (technique de dépôt de couche par immersion ou "dip-coating"), soit à la formation d'une poudre mésostructurée après atomisation (technique aérosol) ou égouttage de la solution. A titre d'exemple, le brevet US 6.387.453 divulgue la formation de films hybrides organiques - inorganiques mésostructurés par la technique de dépôt de couche par immersion ("dip-coating"), ces mêmes auteurs ayant par ailleurs utilisé la technique aérosol pour élaborer des matériaux purement siliciques mésostructurés (C. J. Brinker, Y. Lu, A. Sellinger, H. Fan, Adv. Mater., 1999, 11, 7). La libération de la porosité est ensuite obtenue par élimination du tensioactif, celle-ci étant réalisée classiquement par des procédés d'extraction chimique ou par traitement thermique. En fonction de la nature des précurseurs inorganiques et de l'agent structurant employé ainsi que des conditions opératoires imposées, plusieurs familles de matériaux mésostructurés ont été développées. Pour exemple, la famille M41 S initialement développée par Mobil (J. S. Beck, J. C. Vartuli, W. J. Roth, M. E. Leonowicz, C. T. Kresge, K. D. Schmitt, C. T.-W. Chu, D. H. Olson, E. W. Sheppard, S. B. McCullen, J. B. Higgins, J. L. Schlenker, J. Am. Chem. Soc., 1992, 114, 27, 10834), constituée de matériaux mésoporeux obtenus via l'emploi de surfactants ioniques comme des sels d'ammonium quaternaire, possédant une structure généralement hexagonale, cubique ou lamellaire, des pores de diamètre uniforme compris dans une gamme de 1,5 à 10 nm et des parois amorphes d'épaisseur de l'ordre de 1 à 2 nm a largement été étudiée. Par la suite, des agents structurants de nature chimique différente ont été employés comme des macromolécules amphiphiles de type copolymères à bloc, ces dernières conduisant à des matériaux mésostructurés possédant une structure généralement hexagonale, cubique ou lamellaire, des pores de diamètre uniforme compris dans une gamme de 4 à 50 nm et des parois amorphes d'épaisseur comprise dans une gamme de 3 à 7 nm.

En plus des techniques de synthèse par dépôt de couche par immersion ("dip-coating") ou par formation d'une poudre (aérosol/égouttage) décrites ci-dessus qui utilisent le phénomène de concentration progressive des précurseurs inorganiques et de l'agent structurant au sein de la solution où ils sont présents, les matériaux mésostructurés peuvent être obtenus par précipitation directe au sein d'une solution aqueuse ou dans des solvants de polarité marquée en jouant sur la valeur de la concentration micellaire critique de l'agent structurant. Généralement, la synthèse de ces matériaux obtenus par précipitation nécessite une étape de mûrissement en autoclave et tous les réactifs ne sont pas intégrés aux produits en quantité stoechiométrique puisqu'ils peuvent se retrouver dans le surnageant. En fonction de la structure et du degré d'organisation souhaité pour le matériau mésostructuré final, ces synthèses peuvent avoir lieu en milieu acide (pH ≤ 1) (WO 99/37705) ou en milieu neutre (WO 96/39357), la nature de l'agent structurant utilisé jouant également un rôle prépondérant. Les particules élémentaires ainsi obtenues ne présentent pas de forme régulière et sont caractérisées généralement par une taille bien supérieure à 500 nm.

La découverte de ces matériaux à porosité uniforme et organisée a ouvert de nouvelles perspectives quant à l'élaboration de solides innovants pour des applications potentielles dans des domaines aussi variés que la catalyse, la séparation de molécules chimiques, mais aussi l'optique, l'électronique et la biochimie. En particulier, l'étude de l'introduction de nanoparticules métalliques au sein de matrices oxydes mésostructurées essentiellement siliciques a fait l'objet d'un grand nombre de publications et brevets. En effet, l'utilisation d'un tel réseau hôte lors de la synthèse de nanoparticules métalliques a contribué aux avancées scientifiques suivantes : un meilleur contrôle de la taille et de la morphologie des nanoparticules métalliques conduisant, par exemple dans le domaine de la catalyse, à des activités et des sélectivités nouvelles en fonction des réactions étudiées ainsi qu'une meilleure dispersion des nanoparticules métalliques au sein du support grâce à une diffusion favorisée des précurseurs métalliques de part l'organisation de la porosité du réseau hôte. L'un des procédés classiques permettant l'incorporation des nanoparticules métalliques au sein d'un réseau silicique mésostructuré consiste à synthétiser, lors d'une première étape, le réseau hôte selon les méthodes de synthèse décrites précédemment puis, lors d'une seconde étape, à former à l'intérieur de la porosité ainsi créée des nanoparticules métalliques selon les méthodes non exhaustives suivantes : imprégnation de sels inorganiques précurseurs, échanges d'ions métalliques avec des ions présents à la surface du réseau hôte, greffage de complexes organométalliques, de cristallites (encore appelées "clusters") métalliques ou de nanoparticules pré-formées stabilisées par des ligands organiques, etc.. Ce procédé permet ainsi l'élaboration de solides essentiellement siliciques mésostructurés présentant au sein de leur porosité des nanoparticules d'or, de métaux nobles, d'oxyde de fer, d'oxyde d'argent etc. (A. Fukuoka, H. Araki, Y. Sakamoto, S. Inagaki, Y. Fukushima, M. Ichikawa, Inorganica Chimica Acta, 2003, 350, 371 ; S. Behrens, G. Spittel, Dalton Trans., 2005, 868 ; K. -J. Chao, M. -H. Cheng, Y. -F. Ho, P. -H. Liu, Catalysis Today, 2004, 97, 49 ; M. Frôba, R. Kôhn, G. Bouffaud, Chem. Mater., 1999, 11, 2858). Une autre option consiste à introduire les nanoparticules désirées directement lors de l'élaboration du réseau hôte mésostructuré. Il est ainsi possible d'introduire au sein des micelles formées par l'agent structurant en cours de synthèse des précurseurs de nanoparticules métalliques en jouant sur leurs propriétés hydrophobe ou électrostatique (G. Lü, D. Ji, G. Qian, Y. Qi, X. Wang, J. Suo, Applied Catalysis A: General, 2005, 280, 175 ; Ö. Dag, O. Samarskaya, N. Coombs, G. A. Ozin, J. Mater. Chem., 2003, 13, 328). L'ensemble de ces procédés conduit toutefois à une obstruction partielle voir totale de la porosité de la matrice mésostructurée, ce qui ne permet pas, in fine, de bénéficier simultanément des propriétés texturales et/ou structurales de la mésostructuration et des nanoparticules métalliques.

WO 2006/128988 A1 décrit un matériau inorganique constitué d'au moins deux particules sphériques élémentaires, chacune desdites particules comprenant des nanoparticules métalliques et une matrice mésostructurée, lesdites particules ayant un diamètre maximal de 10 µm. Ce document n'enseigne pas de méthode permettant d'obtenir des particules sphériques de taille plus importantes en gérant les cinétiques d'évaporation de manière à obtenir une mésostructure homogène dans lesdites particules sphériques.

### Résumé de l'invention

L'invention porte sur un matériau constitué d'au moins deux particules sphériques élémentaires, chacune desdites particules sphériques comprenant des nanoparticules métalliques de taille comprise entre 1 et 300 nm et une matrice mésostructurée à base d'oxyde d'au moins un élément X choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par le silicium, l'aluminium, le titane, le zirconium, le gallium, le germanium et le cérium, ladite matrice mésostructurée ayant une taille de pores comprise entre 1,5 et 30 nm et présentant des parois amorphes d'épaisseur comprise entre 1 et 30 nm, lesdites particules sphériques élémentaires ayant un diamètre D supérieur à 10 µm et inférieur ou égal à 100 µm (10 < D (µm) ≤ 100). On entend par nanoparticules métalliques des particules de taille nanométrique comprenant au moins un métal appartenant à la famille des métaux de transition (colonnes 3 à 12 du tableau périodique selon la classification de l'IUPAC) et/ou à la famille des métaux des terres rares (lanthanides et actinides). Le matériau selon l'invention peut également contenir, en plus des nanoparticules métalliques, des nanocristaux zéolithiques piégés dans la matrice oxyde mésostructurée, lesdits nanocristaux zéolithiques ayant une ouverture de pores comprise entre 0,2 et 2 nm.

La présente invention concerne également la préparation du matériau selon l'invention. Un procédé de préparation du matériau selon l'invention appelé "procédé de préparation selon l'invention" comprend a) la synthèse de particules métalliques de taille nanométrique maximale égale à 300 nm afin d'obtenir une solution colloïdale stable dans laquelle sont dispersées lesdites nanoparticules ; b) le mélange en solution d'au moins un tensioactif, d'au moins un précurseur d'au moins un élément X choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par le silicium, l'aluminium, le titane, le zirconium, le gallium, le germanium et le cérium, d'au moins une solution colloïdale stable de nanoparticules métalliques obtenue selon a), et éventuellement d'au moins une solution colloïdale stable dans laquelle sont dispersés des cristaux de zéolithes de taille nanométrique maximale égale à 300 nm ; c) l'atomisation par aérosol de la solution obtenue à l'étape b) en utilisant une buse de pulvérisation qui conduit à la formation de gouttelettes liquides présentant un diamètre inférieur ou égal à 300 µm ; d) le séchage desdites gouttelettes, e) le broyage du produit solide obtenu à l'étape d) ; f) le mélange en solution d'au moins un tensioactif, d'au moins un précurseur d'au moins un élément X choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par le silicium, l'aluminium, le titane, le zirconium, le gallium, le germanium et le cérium, d'au moins une solution colloïdale stable de nanoparticules métalliques obtenue selon a), éventuellement d'au moins une solution colloïdale stable dans laquelle sont dispersés des cristaux de zéolithes de taille nanométrique maximale égale à 300 nm et d'au moins une fraction du produit solide obtenu à l'étape e) de manière à former une suspension ; g) l'atomisation par aérosol de la suspension obtenue à l'étape f) en utilisant une buse de pulvérisation conduisant à la formation de gouttelettes de suspension, lesquelles sont précurseurs des particules élémentaires sphériques présentant un diamètre D tel que 10 < D (µm) ≤ 100 constitutives du matériau selon l'invention ; h) le séchage desdites gouttelettes obtenues à l'étape g) et i) l'élimination dudit tensioactif introduit dans les étapes b) et f) pour l'obtention d'un matériau mésostructuré dans lequel sont piégées des nanoparticules métalliques.

La structure ordonnée de la matrice du matériau selon l'invention est consécutive au phénomène de micellisation ou d'auto-assemblage induit par le procédé "EISA".

### Intérêt de l'invention

Le matériau selon l'invention qui est constitué de particules sphériques comprenant des nanoparticules métalliques piégées dans une matrice mésostructurée, aux parois amorphes, à base d'oxyde d'au moins dudit élément X, présente simultanément les propriétés structurales, hydro-déshydrogénante et d'oxydo-réduction propres aux particules métalliques et les propriétés structurales, texturales et éventuellement d'acido-basicité et d'oxydoréduction propres aux matériaux à base d'oxyde d'au moins dudit élément X. L'élaboration à l'échelle "submicronique" d'un matériau oxyde composite formé d'une matrice mésostructurée et de nanoparticules métalliques conduit à une connexion privilégiée des nanoparticules métalliques et de la mésoporosité uniforme et organisée de la matrice oxyde au sein d'une même particule sphérique.

Le matériau selon l'invention est constitué de particules élémentaires sphériques ayant un diamètre D tel que 10 < D (µm) ≤ 100 et de préférence D est compris en 11 et 70 µm. La taille contrôlable de ces particules résultant de la mise en oeuvre et de la maîtrise du procédé "EISA" par la demanderesse, ainsi que leur forme parfaitement sphérique permettent d'avoir un meilleur contrôle de la diffusion des composés lors de l'emploi du matériau selon l'invention dans des applications industrielles potentielles.

D'autre part, le procédé de préparation du matériau selon l'invention qui consiste à faire interagir, préférentiellement en milieu acide, au moins un tensioactif, ionique ou non ionique, avec au moins un précurseur d'au moins un élément X choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par le silicium, l'aluminium, le titane, le zirconium, le gallium, le germanium et le cérium, au moins une solution colloïdale dans laquelle sont dispersées des particules métalliques de taille nanométrique maximale égale à 300 nm, et éventuellement au moins une solution colloïdale dans laquelle sont dispersés des cristaux de zéolithes de taille nanométrique maximale égale à 300 nm, la structure ordonnée du matériau étant consécutive au phénomène de micellisation ou d'auto-assemblage induit par le procédé "EISA", permet d'élaborer de façon aisée des matériaux composites mésostructurés/nanoparticules métalliques comprenant éventuellement des nanocristaux de zéolithes et de travailler avec une large gamme de nanoparticules métalliques et éventuellement de nanocristaux de zéolithes quels que soient leurs procédés de synthèse initiaux dès lors que lesdites particules, éventuellement lesdits cristaux, ont la propriété de se disperser en solution, notamment en solution acide et très préférentiellement en solution aquo-organique acide, sous la forme de particules, éventuellement sous la forme de cristaux de zéolithes, de taille nanométrique maximale égale à 300 nm.

Par ailleurs, le piégeage éventuel de nanocristaux de zéolithes dans la matrice oxyde mésostructurée en plus de celui des nanoparticules métalliques permet d'élaborer via une méthode de synthèse "one pot" des matériaux possédant simultanément une fonction acide et une fonction hydro-déshydrogénante présentant des connexions privilégiées de par la taille et la morphologie des particules sphériques élémentaires et la mésostructuration de la matrice oxyde.

De plus, par rapport aux synthèses connues des matériaux mésostructurés, la préparation du matériau selon l'invention est réalisée en continu, la durée de préparation est réduite (quelques heures contre de 12 à 24 heures en utilisant l'autoclavage) et la stoechiométrie des espèces non volatiles présentes dans la solution initiale des réactifs est maintenue dans le matériau de l'invention.

### Exposé de l'invention

La présente invention a pour objet un matériau inorganique constitué d'au moins deux particules sphériques élémentaires, chacune desdites particules sphériques comprenant des nanoparticules métalliques de taille comprise entre 1 et 300 nm et une matrice mésostructurée à base d'oxyde d'au moins un élément X choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme et le mélange d'au moins deux de ces éléments, ladite matrice mésostructurée ayant un diamètre de pores compris entre 1,5 et 30 nm et présentant des parois amorphes d'épaisseur comprise entre 1 et 30 nm, lesdites particules sphériques élémentaires ayant un diamètre D supérieur à 10 µm et inférieur ou égal à 100 µm (10 < D (µm) ≤ 100).

Conformément à l'invention, l'élément X présent sous forme d'oxyde dans la matrice mésostructurée comprise dans chacune desdites particules sphériques du matériau selon l'invention est choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme et le mélange d'au moins deux de ces éléments et de préférence ledit élément X présent sous forme d'oxyde est choisi dans le groupe constitué par le silicium, l'aluminium, le titane, le zirconium, le gallium, le germanium et le cérium et le mélange d'au moins deux de ces éléments. Ladite matrice à base d'oxyde d'au moins dudit élément X est mésostructurée : elle présente des mésopores ayant un diamètre uniforme compris entre 1,5 et 30 nm et de préférence entre 1,5 et 10 nm, répartis de façon homogène et régulière dans chacune desdites particules. La matière située entre les mésopores de la matrice mésostructurée est amorphe et forme des parois, ou murs, dont l'épaisseur est comprise entre 1 et 30 nm. L'épaisseur des parois correspond à la distance séparant un premier mésopore d'un second mésopore, le second mésopore étant le pore le plus proche dudit premier mésopore. L'organisation de la mésoporosité décrite ci-dessus conduit à une structuration de ladite matrice, laquelle peut être lamellaire, hexagonale, vermiculaire, cubique, cholestérique ou bicontinue et de façon préférée vermiculaire. Il est à noter qu'une porosité de nature microporeuse peut également résulter de l'imbrication du tensioactif, utilisé lors de la préparation du matériau selon l'invention, avec la paroi inorganique au niveau de l'interface organique-inorganique développée lors de la mésostructuration de la composante inorganique dudit matériau selon l'invention. Le matériau selon l'invention présente également une macroporosité texturale interparticulaire.

La matrice mésostructurée présente dans chacune des particules sphériques élémentaires du matériau selon l'invention est à base d'oxyde d'au moins un élément X choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme et le mélange d'au moins deux de ces éléments et de préférence ledit élément X présent sous forme d'oxyde est choisi dans le groupe constitué par le silicium, l'aluminium, le titane, le zirconium, le gallium, le germanium et le cérium et le mélange d'au moins deux de ces éléments. Selon l'invention, ladite matrice mésostructurée est avantageusement formée d'un premier élément X choisi parmi le silicium, l'aluminium, le titane, le zirconium, le gallium, le germanium et le cérium et d'un deuxième élément X, différent dudit premier élément X, et choisi parmi le silicium, l'aluminium, le titane, le zirconium, le gallium, le germanium et le cérium. De manière très préférée, ladite matrice mésostructurée est à base d'un oxyde de silicium et d'un oxyde d'aluminium ou à base d'un oxyde de silicium et d'un oxyde de zirconium. Selon l'invention, lorsque ladite matrice mésostructurée est à base d'oxydes d'un premier élément X et d'un deuxième élément X, différent dudit premier élément X, la proportion du premier élément X par rapport à celle du deuxième élément X dans la composition de la matrice est variable.

Conformément à l'invention, on entend par nanoparticules métalliques des particules de taille nanométrique comprenant au moins un métal appartenant à la famille des métaux de transition (colonnes 3 à 12 du tableau périodique selon la classification de l'IUPAC) et / ou à la famille des métaux des terres rares (lanthanides et actinides). Plus précisément, lesdites nanoparticules métalliques piégées dans la matrice mésostructurée présente dans chacune des particules sphériques élémentaires du matériau selon l'invention comprennent, selon un premier mode de réalisation desdites particules, au moins un métal de transition au degré d'oxydation zéro appartenant à la liste non exhaustive suivante : Au, Pd, Pt, Ni, Co, Cu, Ag, Rh, Ru, Ir, Fe, leurs mélanges et alliages dérivés. Ledit métal de transition est de préférence choisi parmi l'or, le palladium, le platine, le nickel, le cobalt, le fer, le ruthénium, le rhodium et leurs mélanges et de manière très préférée ledit métal de transition est le fer ou l'or. Lesdites nanoparticules métalliques, comprennent, selon un deuxième mode de réalisation de celles-ci, au moins un oxyde de métal de transition et/ou au moins un oxyde de métal de terre rare, dans le(s)quel(s) ledit métal appartient à la liste non exhaustive suivante : Ti, Zr, Nb, Ta, Mo, W, Fe, Co, Cu, Y, La, Ni, Cr, Pd, Pt, Ce, Eu, Nd, Gd et leurs mélanges. Le métal d'au moins dudit oxyde de métal de transition et / ou le métal d'au moins dudit oxyde de métal de terre rare appartient de manière préférée à la liste suivante : Ti, Zr, Nb, Mo, W, Co, Ni, Ce et leurs mélanges. De plus, les nanoparticules d'oxyde(s) métallique(s) décrites selon le deuxième mode de réalisation desdites particules métalliques peuvent contenir en plus éventuellement l'élément silicium en plus de l'élément métallique. Les nanoparticules métalliques comprennent, selon un troisième mode de réalisation de celles-ci, au moins un oxyde polymétallique de structure cristallographique de type spinelle AB₂O₄, perovskite ABO₃ ou ilménite ABO₃, A et/ou B étant au moins un métal de transition et/ou de terre rare. Dans la structure de type spinelle, A et B sont respectivement des cations divalents et trivalents et dans la structure de type perovskite, A et B sont respectivement des cations divalents et tétravalents. A ou B pouvant éventuellement être un métal des groupes 1 et 2 du tableau périodique selon la classification de l'IUPAC lorsque A ou B n'est ni un métal de transition ni un métal de terre rare. S'agissant de l'ilménite ABO₃, les éléments A et B ont des tailles semblables et sont définis par la somme de leurs charges égale à +6. Pour exemple et de façon non exhaustive, les oxydes métalliques mixtes de type spinelle sont de préférence les composés Fe₃O₄, MgFe₂O₄, ZnFe₂O₄, Co₃O₄, les oxydes métalliques mixtes de type perovskite sont de préférence les composés BaTiO₃, CaTiO₃, SrZnO₃, SrTiO₃, LaFeO₃, LaCeCoO₃, SrHfO₃, SrSnO₃, BaSnO₃, et les oxydes métalliques mixtes de type ilménite sont notamment les composés NiMnO₃ et FeTiO₃. Selon ce troisième mode de réalisation desdites nanoparticules métalliques, plusieurs oxydes polymétalliques de différents types (spinelle, pérovskite, ilménite) peuvent être piégés dans la matrice mésostructurée d'une même particule sphérique. Lesdites nanoparticules métalliques comprennent, selon un quatrième mode de réalisation de celles-ci, au moins un chalcogénure formé d'un métal de transition M et d'un élément chalcogène C choisi parmi le soufre, le sélénium et le tellure, de préférence le soufre. Les chalocogénures métalliques préférés en tant que nanoparticules métalliques appartiennent à la liste non exhaustive suivante : MoS₂, NiSₓ (x = 1 ou 2), Ni₃S₂, WS₂, Co₉S₈, PtS, PdS, RuS₂, Rh₂S₃, NbSₓ (x = 1, 2 ou 3), FeS, FeS₂, Au₂S, ZnS, CdS et de façon très préférée à la liste suivante : MoS₂, NiSₓ (x = 1 ou 2), Ni₃S₂, WS₂, Co₉S₈, PtS, PdS, RuS₂, Rh₂S₃, NbSₓ (x = 1, 2 ou 3).

Conformément à l'invention, les nanoparticules métalliques représentent avantageusement de 0,1 à 30% poids, de préférence de 0,1 à 20% poids et de manière très préférée de 0,1 à 10% poids du matériau de l'invention. Les nanoparticules métalliques ont une taille maximale de 300 nm, de façon préférée elles ont une taille comprise entre 1 et 300 nm et de façon très préférée elles ont une taille comprise entre 2 et 50 nm. Lesdites nanoparticules métalliques sont piégées dans la matrice mésostructurée de chacune des particules sphériques élémentaires du matériau selon l'invention sous la forme décrite dans l'un ou plusieurs des quatre modes de réalisation desdites nanoparticules décrits ci-dessus. En particulier, la matrice mésostructurée d'une particule sphérique peut piéger des nanoparticules métalliques présentes sous plusieurs formes selon les modes de réalisation desdites nanoparticules métalliques décrits ci-dessus. Des premières nanoparticules métalliques présentes sous l'une des formes décrites ci-dessus dans l'un des quatre modes de réalisation et des deuxièmes nanoparticules métalliques présentes sous une autre forme (choisie parmi l'une des formes décrites ci-dessus dans l'un des quatre modes de réalisation) que celle sous laquelle se présentent lesdites premières nanoparticules peuvent être piégées au sein de la matrice mésostructurée d'une même particule sphérique. Par exemple, un métal de transition au degré d'oxydation zéro conformément à la forme prise par les nanoparticules métalliques selon le premier mode de réalisation décrit ci-dessus et un oxyde de métal de transition conformément à la forme prise par les nanoparticules métalliques selon le deuxième mode de réalisation décrit ci-dessus peuvent être piégés dans la matrice mésostructurée d'une même particule sphérique élémentaire du matériau selon l'invention.

De manière avantageuse, chacune des particules sphériques comprend en outre des nanocristaux zéolithiques. Lesdits nanocristaux zéolithiques sont piégés avec les nanoparticules métalliques dans la matrice mésostructurée contenue dans chacune des particules sphériques élémentaires. Conformément à ce mode de réalisation de l'invention consistant à piéger des nanocristaux zéolithiques dans la matrice mésostructurée, le matériau selon l'invention présente à la fois, dans chacune des particules sphériques élémentaires, une mésoporosité au sein de la matrice elle-même (mésopores de taille uniforme comprise entre 1,5 et 30 nm, de préférence entre 1,5 et 10 nm) et une microporosité de type zéolithique générée par les nanocristaux zéolithiques piégés dans la matrice mésostructurée. Lesdits nanocristaux zéolithiques présentent une ouverture de pores comprise entre 0,2 et 2 nm, de préférence entre 0,2 et 1 nm et de manière très préférée entre 0,2 et 0,6 nm. Lesdits nanocristaux zéolithiques représentent avantageusement de 0,1 à 30% poids, de préférence de 0,1 à 20% poids et de manière très préférée de 0,1 à 10% poids du matériau de l'invention. Les nanocristaux zéolithiques ont une taille maximale de 300 nm et de façon préférée ont une taille comprise entre 10 et 100 nm. Toute zéolithe et en particulier mais de façon non restrictive celles répertoriées dans "Atlas of zeolite framework types", 6^{th} revised Edition, 2007, Ch. Baerlocher, L.B. McCusker, D. H. Olson peut être employée dans les nanocristaux zéolithiques présents dans chacune des particules sphériques élémentaires constituant le matériau selon l'invention. Les nanocristaux zéolithiques comprennent de préférence au moins une zéolithe choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, Mordénite, NU-87, NU-88, NU-86, NU-85, IM-5, IM-12, Ferriérite et EU-1. De manière très préférée, les nanocristaux zéolithiques comprennent au moins une zéolithe choisie parmi les zéolithes de type structural MFI, BEA, FAU et LTA. Des nanocristaux de différentes zéolithes et notamment de zéolithes de type structuraux différents peuvent être présents dans chacune des particules sphériques constituant le matériau selon l'invention. En particulier, chacune des particules sphériques constituant le matériau selon l'invention peut comprendre de manière avantageuse au moins des premiers nanocristaux zéolithiques dont la zéolithe est choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, Mordénite, NU-87, NU-88, NU-86, NU-85, IM-5, IM-12, Ferriérite et EU-1, de préférence parmi les zéolithes de type structural MFI, BEA, FAU, et LTA et au moins des seconds nanocristaux zéolithiques dont la zéolithe est différente de celle des premiers nanocristaux zéolithiques et est choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, Mordénite, NU-87, NU-88, NU-86, NU-85, IM-5, IM-12, Ferriérite et EU-1, de préférence parmi les zéolithes de type structural MFI, BEA, FAU et LTA. Les nanocristaux zéolithiques comprennent avantageusement au moins une zéolithe soit entièrement silicique soit contenant, outre du silicium, au moins un élément T choisi parmi l'aluminium, le fer, le bore, l'indium et le gallium, de préférence l'aluminium.

Conformément à l'invention, lesdites particules sphériques élémentaires constituant le matériau selon l'invention ont un diamètre, exprimé en micron, strictement supérieur à 10 µm et inférieur ou égal à 100 µm (10 < D (µm) ≤ 100). De préférence le diamètre D desdites particules sphériques est avantageusement compris entre 11 et 70 µm. Selon un mode de réalisation particulier du matériau selon l'invention, lesdites particules sphériques élémentaires présentent un diamètre D compris entre 11 et 50 µm et de manière très préférée entre 15 et 50 µm. Plus précisément, lesdites particules sphériques élémentaires sont présentes dans le matériau selon l'invention sous la forme d'agrégats. Le matériau selon l'invention présente avantageusement une surface spécifique comprise entre 100 et 1100 m²/g et de manière très avantageuse comprise entre 200 et 600 m²/g.

La présente invention a également pour objet la préparation du matériau selon l'invention. Un procédé de préparation du matériau selon l'invention appelé "procédé de préparation selon l'invention" comprend a) la synthèse de particules métalliques de taille nanométrique maximale égale à 300 nm afin d'obtenir une solution colloïdale stable dans laquelle sont dispersées lesdites nanoparticules ; b) le mélange en solution d'au moins un tensioactif, d'au moins un précurseur d'au moins un élément X choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par le silicium, l'aluminium, le titane, le zirconium, le gallium, le germanium et le cérium, d'au moins une solution colloïdale stable de nanoparticules métalliques obtenue selon a), et éventuellement d'au moins une solution colloïdale stable dans laquelle sont dispersés des cristaux de zéolithes de taille nanométrique maximale égale à 300 nm ; c) l'atomisation par aérosol de la solution obtenue à l'étape b) en utilisant une buse de pulvérisation qui conduit à la formation de gouttelettes liquides présentant un diamètre inférieur ou égal à 300 µm ; d) le séchage desdites gouttelettes, e) le broyage du produit solide obtenu à l'étape d) ; f) le mélange en solution d'au moins un tensioactif, d'au moins un précurseur d'au moins un élément X choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par le silicium, l'aluminium, le titane, le zirconium, le gallium, le germanium et le cérium, d'au moins une solution colloïdale stable de nanoparticules métalliques obtenue selon a), éventuellement d'au moins une solution colloïdale stable dans laquelle sont dispersés des cristaux de zéolithes de taille nanométrique maximale égale à 300 nm et d'au moins une fraction du produit solide obtenu à l'étape e) de manière à former une suspension ; g) l'atomisation par aérosol de la suspension obtenue à l'étape f) en utilisant une buse de pulvérisation conduisant à la formation de gouttelettes de suspension, lesquelles sont précurseurs des particules élémentaires sphériques présentant un diamètre D tel que 10 < D (µm) ≤ 100 constitutives du matériau selon l'invention ; h) le séchage desdites gouttelettes obtenues à l'étape g) et i) l'élimination dudit tensioactif introduit dans les étapes b) et f) pour l'obtention d'un matériau mésostructuré dans lequel sont piégées des nanoparticules métalliques.

Le pourcentage volumique en composés non volatils présents dans la suspension selon l'étape f) du procédé de préparation selon l'invention est au moins égal à 7 %, de préférence au moins égal à 7,5 % et de façon encore plus préférée au moins égal à 10 %. Ledit pourcentage volumique en composés non volatils est défini comme étant le rapport du volume occupé par la fraction inorganique non volatile sous forme d'oxyde(s) condensé(s) dans chaque particule sphérique élémentaire solide obtenue après atomisation additionné du volume occupé par la fraction organique non volatile se retrouvant dans la même particule solide (tensioactif) sur le volume total, l'ensemble étant multiplié par 100. Plus précisément, le volume occupé par la fraction inorganique non volatile V_{inorg} est défini par le rapport m_{inorg}/ρ_{inorg} avec m_{inorg} = masse finale de la fraction inorganique sous forme d'oxyde(s) condensé(s) présente dans chaque particule sphérique élémentaire, c'est-à-dire au moins un oxyde, des nanoparticules métalliques et éventuellement des nanocristaux de zéolithes issus respectivement d'au moins un précurseur d'un élément X, de la solution colloïdale stable contenant les nanoparticules métalliques et éventuellement de la solution colloïdale stable contenant les nanocristaux de zéolithes présents dans l'étape b) et l'étape f) du procédé de préparation selon l'invention additionnés de la fraction inorganique du produit solide de l'étape e) du procédé de préparation selon l'invention. ρ_{inorg} est la masse volumique associée aux différents constituants inorganiques et est aisément accessible à l'Homme du métier. De même, le volume occupé par la fraction organique non volatile V_{org} est défini par le rapport m_{org}/ρ_{org} avec m_{org} = masse de tensioactif présente dans chaque particule sphérique élémentaire, c'est-à-dire le tensioactif présent dans l'étape b) et dans l'étape f) du procédé de préparation selon l'invention additionnés de la fraction organique du produit solide de l'étape e) du procédé de préparation selon l'invention. Le volume total est tel que V_{T} = V_{inorg} + V_{org} + V_{solvant,} V_{inorg} et V_{org} étant définis ci-dessus et Vₛₒₗᵥₐₙₜ correspond au volume total de solvant constitué d'eau et éventuellement d'un solvant organique.

Conformément audit procédé de préparation selon l'invention, la fraction du produit solide obtenu à l'étape e) et utilisée pour la mise en oeuvre de ladite étape f) représente de 1 à 100 % poids, de préférence de 1 à 80% poids et de manière encore plus préférée de 5 à 50 % poids de la quantité totale de produit solide broyé à l'étape e).

Selon un premier mode particulier de réalisation du procédé de préparation selon l'invention, une partie seulement du produit solide issu de l'étape d) est broyée au cours de l'étape e) du procédé selon l'invention ; la partie non broyée n'étant généralement pas réutilisée.

Selon un deuxième mode particulier de réalisation du procédé de préparation selon l'invention, une étape i) d'élimination du tensioactif est réalisée préalablement à l'étape de broyage selon l'étape e) de telle sorte que ladite étape e) est effectuée sur un produit solide exempt de tensioactifs organiques. Les étapes a), b), c), d), i), e), f) et g) devenues consécutives dans le cas particulier dudit deuxième mode de préparation selon l'invention sont suivies par un nouveau cycle de séchage des gouttelettes et d'élimination du tensioactif introduit dans l'étape f) comme décrit selon les étapes h) et i).

Conformément à l'étape a) du procédé de préparation selon l'invention, lesdites nanoparticules métalliques, dispersées en solution colloïdale, sont obtenues via les protocoles de synthèse bien connus de l'Homme du métier. Ainsi, les nanoparticules, dispersées en solution colloïdale, comprenant au moins un métal de transition au degré d'oxydation zéro (premier mode de réalisation des nanoparticules décrit ci-dessus) sont généralement élaborées par réduction d'un sel inorganique dudit métal de transition, ledit sel se présentant avantageusement sous la forme MZₙ où M est ledit métal de transition, Z = CI ou Br et n = 2 ou 3, par un réducteur chimique soluble en milieu organique ou bien aqueux comme un hydrotriorganoborure, un borohydrure, une hydrazine, un alcool (méthanol, éthanol, polyol), un composé organique (aldéhyde, cétone, glucose, citrate, etc.) ou bien un gaz réducteur (hydrogène, monoxyde de carbone) (H. Bonnemann, W. Brijoux, R. Brinkmann, E. Dinjus, T. Jouber, R. B. Korall, Angew. Chem. Int. Ed. Engl., 1991, 30, 10, 1312 ; Y. Nakao, S. Fugishige, J. of Catal., 1992, 74, 323 ; H. Hirai, J. Macromol. Sci. Chem., 1979, A13, 5, 633 ; N. Toshima, T. Takahashi, H. Hirai, Chem. Lett., 1985, 1245). Une variante à cette méthode consiste à élaborer lesdites nanoparticules à partir d'une micro-émulsion d'eau dans une phase organique (M. Boutonnet, J. kizling, P. Stenius, G. Maire, Coll. And Surf., 1982, 5, 209). Il est également possible d'obtenir une solution colloïdale dans laquelle sont dispersées lesdites nanoparticules métalliques sous forme d'au moins un métal de transition au degré d'oxydation zéro en procédant par décomposition thermique d'un complexe organométallique dudit métal de transition (T. Tano, K. Esumi, K. Meguro, J. Coll. And Interface Sci., 1989, 133, 2, 530), par condensation en phase vapeur (vaporisation des atomes métalliques puis piégeage de ces derniers dans des solvants refroidis dans de l'azote liquide) (K. J. Klabunde, Platinium Metals Rev.,1992, 36, 2, 80), par photoréduction, par radiolyse ou bien par réduction électrochimique (N. Toshima, T. Takahashi, H. Hirai, Chem. Lett., 1985, 1245 ; M. Mostafavi, N. Keghouche, M. O. Delcourt, J. Belloni, Chem. Physics Lett., 1990, 167, 3, 193 ; M. T. Reetz, W. Helbig, J. am. Chem. Soc., 1994, 116, 7401). La dispersion en solution des nanoparticules métalliques peut être assurée via la présence d'agents stabilisants comme par exemple des polymères (alcool poly-vinylique, polystyrène, polyéthylène) ou copolymères ou bien des surfactants anioniques (dodécylsulfate de sodium) ou cationiques (chlorure de dodécyltriméthylammonium) ou par le solvant lui-même employé pour la mise en oeuvre de l'étape a) du procédé de préparation selon l'invention.

Les nanoparticules métalliques, dispersées en solution colloïdale, comprenant au moins un oxyde de métal de transition et/ou au moins un oxyde de métal de terre rare (deuxième mode de réalisation des nanoparticules métalliques décrit ci-dessus) ou bien comprenant au moins un oxyde polymétallique (troisième mode de réalisation des nanoparticules métalliques décrit ci-dessus) peuvent être obtenues par une première méthode consistant en une étape d'hydroxylation d'un cation métallique issu du sel dudit métal de transition ou de terre rare par réaction acido-basique (ajout d'un acide ou d'une base) ou bien par réaction de thermohydrolyse suivie d'une étape de condensation faisant intervenir des réactions d'olation ou d'oxolation conduisant aux nanoparticules. Il est également possible d'obtenir ces mêmes nanoparticules métalliques sous forme d'au moins un oxyde de métal de transition et/ou d'au moins un oxyde de métal de terre rare ou sous forme d'au moins un oxyde polymétallique, dispersées en solution colloïdale, par une deuxième méthode mise en oeuvre à partir de réactions d'hydrolyse et de condensation de précurseurs alcoxydes dudit métal de formule M(OR)ₙ où M est un métal de transition ou de terre rare et R est un groupement alkyle, généralement contrôlées par la présence en solution d'un agent complexant (voie sol-gel). L'Homme du métier, voulant mettre en oeuvre l'une ou l'autre de ces méthodes, pourra à toutes fins utiles se référer aux ouvrages et publications suivants : J-P. Jolivet, Metal Oxyde Chemistry and Synthesis. From Solution to Solid State, J. Wiley and Sons, Chichester, 2000 ; F. Schüth, K. S. W. Sing, J. Weitkamp, Handbook of Porous Solids, Wiley-VCH, 2002, Volume 3 ; J. Livage, C. Sanchez, J. Non Cristalline Solids, 1992, 145, 11. Enfin, une troisième méthode pour obtenir des nanoparticules métalliques, dispersées en solution colloïdale, comprenant au moins un oxyde de métal de transition et/ou au moins un oxyde de métal de terre rare (deuxième mode de réalisation des nanoparticules métalliques décrit ci-dessus) ou bien comprenant au moins un oxyde polymétallique (troisième mode de réalisation des nanoparticules métalliques décrit ci-dessus) consiste à mettre en oeuvre des procédés non hydrolytiques généralement à basse température, les systèmes étudiés étant constitués d'un précurseur métallique (sel ou alcoxyde) dans un solvant organique (par exemple de l'alcool benzylique) (M. Niederberger, M. H. Bard, G. D. Stucky, J. Am. Chem. Soc., 2002, 124, 46, 13642).

Dans le cas où lesdites nanoparticules métalliques comprennent non seulement au moins un oxyde de métal de transition et/ou au moins un oxyde de métal de terre rare mais également l'élément silicium, celui-ci est introduit via la combinaison, dans les protocoles de synthèse de l'une des trois méthodes décrites ci-dessus, du précurseur d'oxyde métallique avec un précurseur de silice, ce dernier pouvant être obtenu à partir de toute source de silice et avantageusement d'un précurseur silicate de sodium de formule SiO₂, NaOH, d'un précurseur chloré de formule SiCl₄, d'un précurseur organométallique de formule Si(OR)₄ où R = H, méthyle, éthyle ou d'un précurseur chloroalcoxyde de formule Si(OR)₄₋ₓClₓ où R = H, méthyle, éthyle, x étant compris entre 0 et 4.

Dans le cas particulier où les nanoparticules métalliques piégées dans la matrice mésostructurée à base d'oxyde d'au moins dudit élément X comprennent au moins un métal de transition au degré d'oxydation zéro (premier mode de réalisation des nanoparticules), il est possible, au lieu de synthétiser des nanoparticules métalliques directement sous leur forme réduite (degré d'oxydation zéro) comme décrit plus haut conformément à l'étape a) du procédé selon l'invention, de synthétiser au cours de ladite étape a) une solution colloïdale stable dans laquelle les nanoparticules métalliques y sont dispersées sous la forme oxyde dudit métal de transition puis de procéder à la suite de l'étape i) du procédé selon l'invention à une étape additionnelle j) consistant en une réduction de l'oxyde dudit métal de transition de manière à ce que le métal de transition desdites nanoparticules métalliques piégées dans ladite matrice mésostructurée de chacune des particules sphériques du matériau selon l'invention soit au degré d'oxydation zéro. Les techniques de réduction employées sont similaires à celles préalablement décrites et employées au cours de l'étape a) du procédé selon l'invention lorsqu'il s'agit de synthétiser des nanoparticules métalliques comprenant au moins un métal de transition au degré d'oxydation zéro. En particulier, l'étape additionnelle j) subséquente à l'étape i) du procédé de préparation selon l'invention peut être efficacement réalisée par réduction des nanoparticules métalliques comprenant au moins un oxyde du métal de transition sous atmosphère d'un gaz réducteur (hydrogène, monoxyde de carbone) dans une gamme de température variant de la température ambiante jusqu'à T = 800°C et de façon préférée variant de la température ambiante jusqu'à T = 550°C, le débit de gaz considéré étant fixé dans une gamme de 0,5 à 10 l/h/g de solide et de façon préférée de 0,5 à 5 l/h/g de solide.

Les nanoparticules métalliques, dispersées en solution colloïdale, comprenant au moins un sulfure de métal de transition (quatrième mode de réalisation des nanoparticules métalliques décrit plus haut) peuvent être obtenues à partir des techniques de synthèse non exhaustives suivantes : sulfuration directe des nanoparticules dudit métal de transition au degré d'oxydation zéro ou sous sa forme oxydée (A. Zak, Y. Feldman, V. Alperovich, R. Rosentsveig, R. Tenne, J. Am. Chem. Soc., 2000, 122, 11108), précipitation en solution non aqueuse d'un sel métallique dudit métal de transition en présence d'un agent sulfurant, décomposition thermique du sel dudit métal de transition en phase aqueuse comme des thiométallates.

La plupart des méthodes de synthèse citées précédemment pour la synthèse de nanoparticules métalliques, dispersées en solution colloïdale, sous l'une des quatre formes données dans les quatre modes de réalisation des nanoparticules métalliques décrits ci-dessus sont décrites dans l'article de B. L. Cushing, V. L. Kolesnichenko, C. J. O'Connor, Chem. Rev., 2004, 104, 3893.

Conformément à l'étape a) du procédé de préparation selon l'invention, lesdites nanopaticules métalliques selon l'invention peuvent être également commerciales (par exemple, fourniture par "Rhodia Electronics and Catalysis" de particules d'oxyde de métal de terres rares (La, Ce, etc.), par "Millenium Chemicals" de particules d'oxyde de titane, etc.).

Conformément aux étapes b) et f) du procédé de préparation selon l'invention, le(s) précurseur(s) d'au moins un élément X choisi(s) dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi(s) dans le groupe constitué par le silicium, l'aluminium, le titane, le zirconium, le gallium, le germanium et le cérium est(sont) un(des) précurseur(s) d'oxyde inorganique bien connu(s) de l'Homme du métier. Le(s) précurseur(s) d'au moins dudit élément X peu(ven)t être tout composé comprenant l'élément X et pouvant libérer cet élément en solution, par exemple en solution aquo-organique, préférentiellement en solution aquo-organique acide, sous forme réactive. Dans le cas préféré où X est choisi dans le groupe constitué par le silicium, l'aluminium, le titane, le zirconium, le gallium, le germanium et le cérium et le mélange d'au moins deux de ces éléments, le(s) précurseur(s) d'au moins dudit élément X est(sont) avantageusement un sel inorganique dudit élément X de formule XZₙ (n= 3 ou 4), Z étant un halogène, le groupement NO₃ ou un perchlorate, de préférence Z est le chlore. Le(s) précurseur(s) d'au moins dudit élément X considéré(s) peu(ven)t être aussi un(des) précurseur(s) organométallique(s) de formule X(OR)ₙ ou R = éthyle, isopropyle, n-butyle, s-butyle, t-butyle, etc. ou un précurseur chélaté tel que X(C₅H₈O₂)ₙ, avec n = 3 ou 4. Le(s) précurseur(s) d'au moins dudit élément X considéré(s) peu(ven)t aussi être un(des) oxyde(s) ou un(des) hydroxyde(s) dudit élément X. En fonction de la nature de l'élément X, le précurseur de l'élément X considéré employé peut aussi être de la forme XOZ₂, Z étant un anion monovalent comme un halogène ou le groupement NO₃. De manière préférée, le(s)dit(s) élément(s) X est(sont) choisi(s) dans le groupe constitué par le silicium, l'aluminium, le titane, le zirconium, le gallium, le germanium et le cérium et le mélange d'au moins deux de ces éléments. Lorsqu'au moins un élément X est le silicium, ledit précurseur silicique est alors obtenu à partir de toute source de silice et avantageusement d'un précurseur silicate de sodium de formule SiO₂,NaOH, d'un précurseur chloré de formule SiCl₄, d'un précurseur organométallique de formule Si(OR)₄ où R = H, méthyle, éthyle ou d'un précurseur chloroalcoxyde de formule Si(OR)₄₋ₓClₓ où R = H, méthyle, éthyle, x étant compris entre 0 et 4. Le précurseur silicique peut également avantageusement être un précurseur organométallique de formule Si(OR)₄₋ₓR'ₓ où R = H, méthyle, éthyle et R' est une chaîne alkyle ou une chaîne alkyle fonctionnalisée, par exemple par un groupement thiol, amino, β dicétone ou acide sulfonique, x étant compris entre 0 et 4.

Le tensioactif utilisé pour la préparation du mélange selon les étapes b) et f) du procédé de préparation selon l'invention est un tensioactif ionique ou non ionique ou un mélange des deux. De préférence, le tensioactif ionique est choisi parmi les ions phosphonium et ammonium et très préférentiellement parmi les sels d'ammonium quaternaire comme le bromure de céthyltriméthylammonium (CTAB). De préférence, le tensioactif non ionique peut être tout copolymère possédant au moins deux parties de polarités différentes leur conférant des propriétés de macromolécules amphiphiles. Ces copolymères peuvent comporter au moins un bloc faisant partie de la liste non exhaustive des familles de polymères suivantes : les polymères fluorés (-[CH₂-CH₂-CH₂-CH₂-O-CO-R1- avec R1 = C₄F₉, C₈F₁₇, etc.), les polymères biologiques comme les polyacides aminés (poly-lysine, alginates, etc.), les dendrimères, les polymères constitués de chaînes de poly(oxyde d'alkylène). De façon générale, tout copolymère à caractère amphiphile connu de l'Homme du métier peut être utilisé (S. Förster, M. Antionnetti, Adv.Mater, 1998, 10, 195-217 ; S. Förster, T.Plantenberg, Angew. Chem. Int. Ed, 2002, 41, 688-714 ; H. Cölfen, Macromol. Rapid Commun, 2001, 22, 219-252). De manière préférée, on utilise dans le cadre de la présente invention un copolymère bloc constitué de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, l'un au moins des blocs est constitué d'une chaîne de poly(oxyde d'alkylène) de nature hydrophile tandis que l'un au moins des autres blocs est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées (PEO)ₓ et (PEO)_{z} et les chaînes de poly(oxyde d'alkylène) de nature hydrophobe sont des chaînes de poly(oxyde de propylène) notées (PPO)y, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, on utilise un composé de formule (PEO)ₓ-(PPO)_{y}-(PEO)_{z} où x est compris entre 5 et 300 et y est compris entre 33 et 300 et z est compris entre 5 et 300. De préférence, les valeurs de x et z sont identiques. On utilise très avantageusement un composé dans lequel x = 20, y = 70 et z = 20 (P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques dans les étapes b) et f) du procédé selon l'invention. Pour un copolymère à quatre blocs, deux des blocs sont constitués d'une chaîne de poly(oxyde d'alkylène) de nature hydrophile et les deux autres blocs sont constitués d'une chaîne de poly(oxydes) d'alkylène de nature hydrophobe.

Selon les étapes b) et f) du procédé de préparation selon l'invention, la solution colloïdale dans laquelle sont dispersés des cristaux de zéolithes de taille nanométrique maximale égale à 300 nm, éventuellement additionnée au mélange visé auxdites étapes b) et f) du procédé de préparation selon l'invention, est obtenue soit par synthèse préalable, en présence d'un agent structurant, de nanocristaux zéolithiques de taille nanométrique maximale égale à 300 nm soit par l'emploi de cristaux zéolithiques, qui présentent la caractéristique de se disperser sous la forme de nanocristaux de taille nanométrique maximale égale à 300 nm en solution par exemple en solution aquo-organique acide. S'agissant de la première variante consistant en une synthèse préalable des nanocristaux zéolithiques, ceux-ci sont synthétisés selon des protocoles opératoires connus de l'Homme du métier. En particulier, la synthèse de nanocristaux de zéolithe Bêta a été décrite par T. Bein et coll., Micropor. Mesopor. Mater., 2003, 64, 165. La synthèse de nanocristaux de zéolithe Y a été décrite par T. J. Pinnavaia et coll., J. Am. Chem. Soc., 2000, 122, 8791. La synthèse de nanocristaux de zéolithe Faujasite a été décrite dans Kloetstra et coll., Microporous Mater., 1996, 6, 287. La synthèse de nanocristaux de zéolithe ZSM-5 a été décrite par R. Mokaya et coll., J. Mater. Chem., 2004, 14, 863. La synthèse de nanocristaux de Silicalite (ou de type structural MFI) a été décrite dans plusieurs publications : R. de Ruiter et coll., Synthesis of Microporous Materials, Vol. I ; M. L. Occelli, H. E. Robson (eds.), Van Nostrand Reinhold, New York, 1992, 167 ; A.E. Persson, B.J. Schoeman, J. Sterte, J.-E. Otterstedt, Zeolites, 1995, 15, 611-619. On synthétise généralement des nanocristaux zéolithiques en préparant un mélange réactionnel renfermant au moins une source silicique, éventuellement au moins une source d'au moins un élément T choisi parmi l'aluminium, le fer, le bore, l'indium et le gallium, de préférence au moins une source aluminique, et au moins un agent structurant. Le mélange réactionnel est soit aqueux soit aquo-organique, par exemple un mélange eau-alcool. Le mélange réactionnel est avantageusement mis sous conditions hydrothermales sous une pression autogène, éventuellement en ajoutant du gaz, par exemple de l'azote, à une température comprise entre 50 et 200°C, de préférence entre 60 et 170°C et de manière encore préférentielle à une température qui ne dépasse pas 120°C jusqu'à la formation de nanocristaux zéolithiques. A l'issue dudit traitement hydrothermal, on obtient une solution colloïdale dans laquelle les nanocristaux se trouvent à l'état dispersé. L'agent structurant peut être ionique ou neutre selon la zéolithe à synthétiser. Il est fréquent d'utiliser les agents structurants de la liste non exhaustive suivante : des cations organiques azotés, des éléments de la famille des alcalins (Cs, K, Na, etc.), des éthercouronnes, des diamines ainsi que tout autre agent structurant bien connu de l'Homme du métier. S'agissant de la deuxième variante consistant à utiliser directement des cristaux zéolithiques, ceux-ci sont synthétisés par des méthodes connues de l'Homme du métier. Lesdits cristaux zéolithiques peuvent être déjà sous la forme de nanocristaux. On utilise aussi avantageusement des cristaux zéolithiques de taille supérieure à 300 nm, par exemple comprise entre 300 nm et 200 µm qui se dispersent en solution, par exemple en solution aquo-organique, préférentiellement en solution aquo-organique acide, sous la forme de nanocristaux de taille nanométrique maximale égale à 300 nm. L'obtention de cristaux zéolithiques se dispersant sous la forme de nanocristaux de taille nanométrique maximale égale à 300 nm est également possible en réalisant une fonctionnalisation de la surface des nanocristaux. Les cristaux zéolithiques utilisés se trouvent soit sous leur forme brute de synthèse, c'est-à-dire contenant encore l'agent structurant, soit sous leur forme calcinée, c'est-à-dire débarrassés dudit agent structurant. Lorsque les cristaux zéolithiques utilisés sont sous leur forme brute de synthèse, ledit agent structurant est éliminé au cours de l'étape i) du procédé de préparation selon l'invention.

La solution dans laquelle sont mélangés au moins un tensioactif, au moins un précurseur d'au moins dudit élément X, au moins une solution colloïdale de nanoparticules métalliques obtenue selon a), et éventuellement au moins une solution colloïdale stable dans laquelle sont dispersés des cristaux de zéolithes de taille nanométrique maximale égale à 300 nm, conformément aux étapes b) et f) du procédé de préparation selon l'invention peut être acide, neutre ou basique. De préférence, ladite solution est acide et présente un pH maximal égal à 3, de préférence compris entre 0 et 2. Les acides utilisés pour obtenir une solution acide de pH maximal égal à 3 sont, de façon non exhaustive, l'acide chlorhydrique, l'acide sulfurique et l'acide nitrique. Lesdites solutions selon les étapes b) et f) du procédé de préparation selon l'invention peuvent être aqueuse ou peuvent être un mélange eau-solvant organique, le solvant organique étant préférentiellement un solvant polaire miscible à l'eau, notamment le THF ou un alcool, dans ce dernier cas préférentiellement de l'éthanol. Lesdites solutions selon les étapes b) et f) du procédé de préparation selon l'invention peuvent aussi être pratiquement organique, de préférence pratiquement alcoolique, la quantité d'eau étant telle que l'hydrolyse des précurseurs inorganiques est assurée (quantité stoechiométrique). De manière très préférée, lesdites solutions selon les étapes b) et f) du procédé de préparation selon l'invention dans lesquelles sont mélangés au moins un tensioactif, au moins un précurseur d'au moins dudit élément X, au moins une solution colloïdale de nanoparticules métalliques obtenue selon l'étape a) (procédé selon l'invention), et éventuellement au moins une solution colloïdale stable dans laquelle sont dispersés des cristaux de zéolithes de taille nanométrique maximale égale à 300 nm, est un mélange aquo-organique acide, très préférentiellement un mélange eau acide-alcool.

La quantité de nanoparticules métalliques comprenant au moins un métal appartenant à la famille des métaux de transition (colonnes 3 à 12 du tableau périodique selon la classification de l'IUPAC) et / ou à la famille des métaux des terres rares (lanthanides et actinides), est telle que lesdites nanoparticules métalliques représentent avantageusement de 0,1 à 30% poids, de préférence de 0,1 à 20% poids et de manière très préférée de 0,1 à 10% poids du matériau de l'invention.

La quantité de nanocristaux zéolithiques dispersés dans la solution colloïdale, obtenus selon la variante par synthèse préalable, en présence d'un agent structurant, de nanocristaux zéolithiques de taille nanométrique maximale égale à 300 nm ou selon la variante par l'emploi de cristaux zéolithiques, qui présentent la caractéristique de se disperser sous la forme de nanocristaux de taille nanométrique maximale égale à 300 nm en solution par exemple en solution aquo-organique acide, éventuellement introduite au cours des étapes b) et f) du procédé de préparation selon l'invention, est telle que les nanocristaux zéolithiques représentent avantageusement de 0,1 à 30% poids, de préférence de 0,1 à 20% poids et de manière très préférée de 0,1 à 10% poids du matériau de l'invention.

La concentration initiale en tensioactif introduit dans le mélange conformément aux étapes b) et f) du procédé de préparation selon l'invention est définie par c₀ et c₀ est définie par rapport à la concentration micellaire critique (c_{mc}) bien connue de l'Homme du métier. La c_{mc} est la concentration limite au delà de laquelle se produit le phénomène d'auto-arrangement des molécules du tensioactif dans la solution. La concentration c₀ peut être inférieure, égale ou supérieure à la c_{mc}, de préférence elle est inférieure à la c_{mc}. Dans une mise en oeuvre préférée de la préparation du matériau selon l'invention, la concentration c₀ est inférieure à la c_{mc} et ladite solution visée à l'étape b) respectivement la solution visée à l'étape f) du procédé de préparation selon l'invention est un mélange eau acide-alcool. Dans le cas où la solution visée aux étapes b) et f) du procédé de préparation selon l'invention est un mélange eau-solvant organique, de préférence acide, il est préféré au cours des étapes b) et f) du procédé de préparation selon l'invention que la concentration en tensioactif à l'origine de la mésostructuration de la matrice soit inférieure à la concentration micellaire critique de sorte que l'évaporation des solutions aquo-organiques, préférentiellement acides, au cours des étapes c) et g) du procédé de préparation selon l'invention, par la technique d'aérosol induise un phénomène de micellisation ou d'auto-assemblage conduisant à la mésostructuration de la matrice du matériau selon l'invention autour des nanoparticules métalliques et éventuellement des nanocristaux zéolithiques lesquels demeurent inchangés dans leur forme et leur taille au cours des étapes c), g) et d), h) du procédé de préparation de l'invention. Lorsque c₀<c_{mc}, la mésostructuration de la matrice du matériau selon l'invention et préparé selon le procédé de préparation selon l'invention décrit ci-dessus est consécutive à une concentration progressive, au sein de chaque gouttelette, d'au moins du précurseur dudit élément X, et du tensioactif, jusqu'à une concentration en tensioactif c>c_{mc} résultant d'une évaporation de la solution aquo-organique, préférentiellement acide.

De manière générale, l'augmentation de la concentration conjointe d'au moins un précurseur d'au moins un élément X, hydrolysé, et du tensioactif provoque la précipitation d'au moins dudit précurseur hydrolysé dudit élément X autour du tensioactif auto-organisé et en conséquence la structuration de la matrice du matériau selon l'invention. Les interactions phases inorganique / inorganique, phases organique / organique et phases organique / inorganique conduisent par un mécanisme d'auto-assemblage coopératif à la condensation d'au moins dudit précurseur dudit élément X hydrolysé autour du tensioactif auto-organisé. Lors de ce phénomène d'auto-assemblage, les nanoparticules métalliques et éventuellement les nanocristaux zéolitiques se retrouvent piégés dans ladite matrice mésostructurée à base d'oxyde d'au moins un élément X comprise dans chacune des particules sphériques élémentaires constituant le matériau de l'invention.

L'emploi de buses de pulvérisation est particulièrement avantageux pour contraindre les réactifs présents dans les étapes c) et g) du procédé selon l'invention à interagir entre eux, aucune perte de matière hormis les solvants, c'est-à-dire la solution, préférentiellement la solution aqueuse, préférentiellement acide, et éventuellement additionnée d'un solvant polaire, n'étant possible, la totalité de l'élément X et des nanoparticules métalliques, éventuellement des nanocristaux zéolithiques, présents initialement étant ainsi parfaitement conservée tout au long de la préparation du matériau de l'invention au lieu d'être potentiellement éliminée lors des étapes de filtration et de lavages rencontrées dans des procédés de synthèse classiques connues de l'Homme du métier.

L'obtention de particules élémentaires sphériques de diamètre D tel que 10 < D (µm) ≤ 100 au moyen du procédé "EISA", en particulier par la technique aérosol, spécifique de l'invention oblige à une connaissance et une maîtrise accrues des paramètres opératoires de synthèse, essentiellement au niveau des étapes b), c), f) et g) du procédé selon l'invention, afin de maintenir le processus de mésostructuration par auto-assemblage du tensioactif conjointement aux réactions d'hydrolyse / condensation des divers précurseurs inorganiques. En effet, la production de gouttelettes de diamètre inférieur ou égal à 300 µm conduit à des cinétiques d'évaporation de la solution ou de la suspension aquo-organique d'autant plus lentes que la gouttelette est grosse (car proportionnelles au carré du diamètre de la goutte à évaporer). Si le temps d'évaporation total est plus lent que le temps de condensation de la matière inorganique à la périphérie de la goutte, il se forme une couche de matériau condensé à l'interface d'évaporation constituant une barrière supplémentaire à l'évaporation. Si cette couche supplémentaire devient rigide avant que suffisamment de solvant, c'est-à-dire d'eau éventuellement additionnée de solvant organique, se soit évaporé, le rapport du volume des constituants polaires sur le volume des constituants apolaires dans les mélanges selon les étapes b) et f) du procédé de l'invention noté Vₚₒₗ/Vₐₚₒₗ = (V_{inorg} + Vₛₒₗᵥₐₙₜ + V_{org polaire})/(V_{org} hydrophobe), paramètre critique qui conditionne l'apparition d'une mésostructuration, est variable entre les zones "pellicule rigide de surface" et "coeur de la particule" (avec V_{inorg} = m_{inorg}/ρ_{inorg} tel que défini plus haut dans la présente description et V_{org} polaire + V_{org} hydrophobe = V_{org} tel que défini également plus haut dans la présente description et Vₛₒₗᵥₐₙₜ = volume total de solvant, le solvant étant formé d'eau et éventuellement d'un solvant organique, V_{org} polaire = volume des parties polaires des réactifs organiques, V_{org hydrophobe} = volume des parties apolaires des réactifs organiques). Au coeur, les éléments présents doivent alors accommoder la mésostructuration à un volume total (défini par le volume inscrit dans la croûte rigide) supérieur à la valeur optimale. Si le rapport Vₚₒₗ/Vₐₚₒₗ est trop éloigné de la valeur optimale de mésostructuration, l'homogénéité de mésostructure des particules produites se détériore et peut disparaître pour former des particules constituées d'une croûte bien mésostructurée et d'un coeur non mésostructuré (amorphe ou bien résultant d'une décomposition spinodale selon les éléments constitutifs et les solvants employés). Afin d'éviter ce phénomène rédhibitoire pour l'élaboration du matériau selon l'invention, il convient dans les étapes c) et g) du procédé selon l'invention, de limiter le volume de solvant à évaporer, autrement dit, de concentrer les solutions aérosolées afin de travailler préférentiellement avec une valeur Cₒ proche ou supérieure à la C_{mc}. Ceci se traduit par la présence de composés non volatils dans la suspension selon l'étape f) du procédé de préparation selon l'invention dans une quantité telle que le pourcentage volumique desdits composés présents dans ladite suspension respectivement ladite solution est d'au moins 7%. Le maximum de ce pourcentage volumique est propre à chaque système et est limité principalement par trois critères : (i) le manque de stabilité dans le temps des solutions obtenues aux étapes b) et f) du procédé de l'invention, (ii) la précipitation spontanée de la solution à trop forte concentration (soit par manque de solubilité de l'un ou plusieurs constituants, soit par réaction de condensation des constituants inorganiques présents en solutions obtenues aux étapes b) et f) du procédé de l'invention, et (iii) les propriétés rhéologiques des solutions obtenues aux étapes b) et f) du procédé de l'invention qui peuvent devenir inadaptées à la formation des gouttelettes par les buses de pulvérisations (viscosité trop élevée par exemple).

L'étape d'atomisation de la solution selon les étapes c) et g) du procédé de préparation selon l'invention produit des gouttelettes sphériques présentant un diamètre inférieur ou égal à 300 µm par l'utilisation d'une buse de pulvérisation, ladite buse pouvant être "mono-fluide" ou "bi-fluide" (avec contrôle de la pression d'un gaz tel que de l'air comprimé ou de l'azote) selon les termes bien connus de l'Homme du métier. Par exemple des buses de chez Spraying System Emani peuvent être employées (buse "mono-fluide" de type N22^{®} ou "bi-fluide" de type SU4^{®} par exemple). La distribution en taille de ces gouttelettes est de type lognormale. L'atomisation de la solution se fait dans une chambre dans laquelle est envoyé un gaz vecteur, un mélange air sec/azote pour les plus petites installations et azote seul pour des installations plus conséquentes. Conformément aux étapes d) et h) du procédé de préparation selon l'invention, on procède au séchage desdites gouttelettes. Ce séchage est réalisé par le contact desdites gouttelettes avec le gaz ci-dessus, ce qui conduit à l'évaporation progressive de la solution respectivement de la suspension, par exemple de la solution aquo-organique acide respectivement de la suspension aquo-organique acide, obtenue au cours de l'étape b) respectivement de l'étape f) du procédé de préparation du matériau selon l'invention, et ainsi à l'obtention de particules élémentaires sphériques. La température de sortie assurant le séchage dans la chambre de l'atomiseur est comprise dans une gamme de 80 à 250°C. La distribution de temps de séjour des gouttelettes ou particules dans la chambre d'atomisation est de l'ordre de quelques secondes. Lors de l'étape e) du procédé selon l'invention, les particules sont broyées (broyeur jet d'air Netzsch CGS10 par exemple) et ramenées à quelques µm (3 à 5 µm en général). Suivant l'installation, les particules sont récoltées à la sortie d'un cyclone ou dans un filtre à manche. Le séchage des particules selon les étapes d) et h) du procédé selon l'invention est avantageusement suivi d'un traitement thermique complémentaire à une température comprise entre 50 et 300°C avant l'élimination du tensioactif au cours de l'étape i) du procédé selon l'invention afin d'obtenir le matériau selon l'invention à porosité mésostructurée. Ladite élimination du tensioactif introduit dans les étapes b) et f) du procédé selon l'invention est avantageusement réalisée par des procédés d'extraction chimique ou par traitement thermique et de préférence par calcination sous air dans une gamme de température de 300 à 1000°C et plus précisément dans une gamme de 300 à 600°C pendant une durée de 1 à 24 heures et de façon préférée pendant une durée de 2 à 6 heures.

Le matériau mésostructuré selon l'invention constitué de particules sphériques élémentaires comprenant des nanoparticules métalliques piégées dans une matrice oxyde mésostructurée, peut être obtenu sous forme de poudre, de billes, de pastilles, de granulés, ou d'extrudés, les opérations de mises en forme étant réalisées par les techniques classiques connues de l'Homme du métier. De préférence, le matériau selon l'invention est obtenu sous forme de poudre, laquelle est constituée de particules sphériques élémentaires ayant un diamètre D tel que 10 < D (µm) ≤ 100, ce qui facilite la diffusion éventuelle des réactifs dans le cas de l'emploi du matériau selon l'invention dans une application industrielle potentielle.

Le matériau mésostructuré selon l'invention constitué de particules sphériques élémentaires comprenant des nanoparticules métalliques piégées dans une matrice oxyde mésostructurée, présentant une porosité organisée et uniforme dans le domaine de la mésoporosité, est caractérisé par plusieurs techniques d'analyses et notamment par Diffraction des Rayons X aux bas angles (DRX aux bas angles), par Diffraction des rayons X aux grands angles (DRX aux grands angles), par Volumétrie à l'Azote (BET), par Microscopie électronique à transmission (MET), par microscopie électronique à balayage (MEB) et par Spectrométrie d'émission à plasma induit par haute fréquence (ICP).

La technique de Diffraction des Rayons X aux bas angles (valeurs de l'angle 2θ comprises entre 0,5 et 6°) permet de caractériser la périodicité à l'échelle nanométrique générée par la mésoporosité organisée de la matrice mésostructurée du matériau de l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1,5406 Å). Les pics habituellement observés sur les diffractogrammes correspondants à une valeur donnée de l'angle 2θ sont associés aux distances inter réticulaires d₍ₕₖₗ₎ caractéristiques de la symétrie structurale du matériau ((hkl) étant les indices de Miller du réseau réciproque) par la relation de Bragg : 2 d ₍ₕₖₗ₎ * sin (θ) = n * λ. Cette indexation permet alors la détermination des paramètres de maille (abc) du réseau direct, la valeur de ces paramètres étant fonction de la structure, hexagonale, cubique, vermiculaire, cholestérique, lamellaire ou bicontinue obtenue. Pour exemple, le diffractogramme de Rayons X aux bas angles d'un matériau mésostructuré selon l'invention constitué de particules sphériques élémentaires comportant une matrice mésostructurée oxyde à base de silicium et d'aluminium obtenu selon le procédé de préparation selon l'invention via l'emploi du sel d'ammonium quaternaire qu'est le bromure de céthyltriméthylammonium CH₃(CH₂)₁₅N(CH₃)₃Br (CTAB) présente un pic de corrélation parfaitement résolu correspondant à la distance de corrélation entre pores d caractéristique d'une structure de type vermiculaire et définie par la relation de Bragg 2 d ₍ₕₖₗ₎ * sin (θ) = n * λ. La technique de Diffraction des Rayons X aux grands angles (valeurs de l'angle 2θ comprises entre 5 et 100°) permet de caractériser un solide cristallisé défini par la répétition d'un motif unitaire ou maille élémentaire à l'échelle moléculaire. Elle suit le même principe physique que celui régissant la technique de diffraction des Rayons X aux bas angles. La technique DRX aux grands angles est donc utilisée pour analyser les matériaux de l'invention car elle est tout particulièrement adaptée à la caractérisation structurale des nanoparticules métalliques pouvant être cristallisées, et éventuellement des nanocristaux zéolithiques, présents dans chacune des particules sphériques élémentaires constituant le matériau défini selon l'invention. En particulier, elle permet d'accéder à la taille des pores des nanocristaux zéolithiques lors de la présence de ces derniers. Pour exemple, un matériau mésostructuré selon l'invention, obtenu selon le procédé de préparation selon l'invention, et constitué de particules sphériques élémentaires comprenant des nanoparticules métalliques d'oxyde de fer γ-Fe₂O₃ piégées dans une matrice mésostructurée oxyde à base d'aluminium et de silicium et obtenu via l'emploi du sel d'ammonium quaternaire qu'est le bromure de céthyltriméthylammonium CH₃(CH₂)₁₅N(CH₃)₃Br (CTAB) présente, en DRX aux grands angles, le diffractogramme associé au groupe de symétrie fd3m des nanoparticules d'oxydes de fer cristallisées aux grands angles et, en DRX aux bas angles, un pic de corrélation parfaitement résolu aux petits angles associé à la structure de type vermiculaire de la matrice mésostructurée qui correspond à une distance d de corrélation entre pores. Lors de la présence, éventuelle, de nanocristaux de zéolithes piégés dans ladite matrice mésostructurée oxyde, pour exemple des nanocristaux de zéolithe du type ZSM-5 (MFI), le diffractogramme aux grand angles associés présente, en plus des pics associés auxdites nanoparticules métalliques d'oxyde de fer, les pics attribués au groupe de symétrie Pnma (N°62) de la zéolithe ZSM-5. La valeur de l'angle obtenue sur le diffractogramme RX permet de remonter à la distance de corrélation d selon la loi de Bragg : 2 d ₍ₕₖₗ₎ * sin (θ) = n * λ.

La volumétrie à l'azote correspondant à l'adsorption physique de molécules d'azote dans la porosité du matériau via une augmentation progressive de la pression à température constante renseigne sur les caractéristiques texturales (diamètre de pores, type de porosité, surface spécifique) particulières du matériau selon l'invention. En particulier, elle permet d'accéder à la surface spécifique et à la distribution mésoporeuse du matériau. On entend par surface spécifique, la surface spécifique B.E.T. (S_{BET} en m²/g) déterminée par adsorption d'azote conformément à la norme ASTM D 3663-78 établie à partir de la méthode BRUNAUER-EMMETT-TELLER décrite dans le périodique "The Journal of American Society", 1938, 60, 309. La distribution poreuse représentative d'une population de mésopores centrée dans une gamme de 1,5 à 50 nm est déterminée par le modèle Barrett-Joyner-Halenda (BJH). L'isotherme d'adsorption - désorption d'azote selon le modèle BJH ainsi obtenue est décrite dans le périodique *"*The Journal of American Society", 1951, 73, 373, écrit par E. P. Barrett, L. G. Joyner et P. P. Halenda. Dans l'exposé qui suit, le diamètre des mésopores φ de la matrice mésostructurée correspond au diamètre moyen à l'adsorption d'azote défini comme étant un diamètre tel que tous les pores inférieurs à ce diamètre constituent 50% du volume poreux (Vp) mesuré sur la branche d'adsorption de l'isotherme azote. De plus, l'allure de l'isotherme d'adsorption d'azote et de la boucle d'hystérésis peuvent renseigner sur la nature de la mésoporosité et sur la présence éventuelle de microporosité liée essentiellement aux nanocristaux zéolithiques lorsqu'ils sont présents dans la matrice oxyde mésostructurée. Pour exemple, l'isotherme d'adsorption d'azote relative à un matériau mésostructuré selon l'invention, obtenu selon le procédé de préparation selon l'invention et constitué de particules sphériques élémentaires comportant une matrice mésostructurée oxyde à base d'aluminium et de silicium préparée via l'emploi du sel d'ammonium quaternaire bromure de céthyltriméthylammonium CH₃(CH₂)₁₅N(CH₃)₃Br (CTAB) est caractérisée par une isotherme d'adsorption de classe IVc avec présence d'une marche d'adsorption pour des valeurs de P/P0 (où P0 est la pression de vapeur saturante à la température T) comprises entre 0,2 et 0,3 associée à la présence de pores de l'ordre de 2 à 3 nm comme confirmée par la courbe de distribution poreuse associée.

Concernant la matrice mésostructurée, la différence entre la valeur du diamètre des pores φ et le paramètre de maille a défini par DRX aux bas angles comme décrit ci-dessus permet d'accéder à la grandeur e où e = a - φ et est caractéristique de l'épaisseur des parois amorphes de la matrice mésostructurée comprises dans chacune des particules sphériques du matériau selon l'invention. Ledit paramètre de maille a est relié à la distance d de corrélation entre pores par un facteur géométrique caractéristique de la géométrie de la phase. Pour exemple, dans le cas d'une maille hexagonale e = a - φ avec a = 2*d/√3, dans le cas d'une structure vermiculaire e = d - φ.

L'analyse par microscopie électronique par transmission (MET) est une technique également largement utilisée pour caractériser la structure de ces matériaux. Celle-ci permet la formation d'une image du solide étudié, les contrastes observés étant caractéristiques de l'organisation structurale, de la texture ou bien de la morphologie des particules observées, la résolution de la technique atteignant au maximum 0,2 nm. Dans l'exposé qui suit, les photos MET seront réalisées à partir de coupes microtomes de l'échantillon afin de visualiser une section d'une particule sphérique élémentaire du matériau selon l'invention. Pour exemple, les images MET obtenues pour un matériau selon l'invention, obtenu selon le procédé de préparation selon l'invention, et constitué de particules sphériques comprenant des nanoparticules métalliques d'or au degré d'oxydation zéro piégées dans une matrice mésostructurée à base d'oxyde de titane laquelle a été préparée via l'emploi du sel d'ammonium quaternaire bromure de céthyltriméthylammonium CH₃(CH₂)₁₅N(CH₃)₃Br (CTAB) présentent au sein d'une même particule sphérique une mésostructure vermiculaire (la matière étant définie par des zones sombres) au sein de laquelle sont visualisés des objets opaques représentant les nanoparticules métalliques d'or piégées dans la matrice mésostructurée. L'analyse de l'image permet également d'accéder aux paramètres d, φ et e, caractéristiques de la matrice mésostructurée définis précédemment. Il est parfois possible de visualiser également sur ce même cliché les plans réticulaires des nanoparticules métalliques, qui peuvent être cristallisées, au lieu des objets opaques cités précédemment, ainsi que les nanocristaux zéolithiques lorsqu'ils sont présents, dans la matrice mésostructurée et d'accéder ainsi à leur structure cristallographique.

La morphologie et la distribution en taille des particules élémentaires ont été établies par analyse de photos obtenues par microscopie électronique à balayage (MEB).

La structure de la matrice mésostructurée comprise dans chacune des particules du matériau selon l'invention peut être, cubique, vermiculaire, hexagonale, lamellaire, cholestérique ou bicontinue en fonction de la nature du tensioactif choisi comme agent structurant.

L'invention est illustrée au moyen des exemples qui suivent.

### Exemples

Dans les exemples qui suivent, la technique aérosol utilisée est celle décrite ci-dessus dans l'exposé de l'invention.

### Exemple 1 : préparation d'un matériau présentant des nanoparticules métalliques d'or à 3% poids du matériau final piégées dans une matrice mésostructurée d'oxyde de titane TiO₂ (procédé de préparation selon l'invention)

1 mole de Brij 58 est dissoute dans 10 kg d'éthanol à température ambiante. 2,4 kg de TiCl₄ sont ajoutés à cette solution sous vigoureuse agitation. 11,1 litres d'une solution de colloïdes d'or à 0,014 mol.l⁻¹ (J. Turkevitch, P.C. Stevenson, J. Hillier, Discuss. Faraday Soc., 1951, 11, 55) est concentrée par centrifugation à 2,2 litres (0,071 mol/l) et ajoutée lentement à la solution à base de TiCl₄ précédente. L'ensemble est passé aux ultrasons pendant environ une minute puis atomisé à l'aide d'une buse de pulvérisation "mono-fluide" dans une chambre dans laquelle est envoyé un gaz vecteur, un mélange air sec/azote. Les gouttelettes, obtenues par atomisation, sont séchées à 100°C selon le protocole décrit dans l'exposé de l'invention ci-dessus conformément à l'étape d) du procédé selon l'invention. Les particules sont récoltées dans un filtre à manche. Lesdites particules sont broyées à l'aide d'un broyeur jet d'air et ramenée à quelques µm (de 3 à 5 µm). Une fraction de 30% poids de ces particules broyées est alors réintroduite dans une solution de même formulation que la solution initiale puis la suspension est à nouveau atomisée à l'aide d'une buse mono-fluide comme précédemment et les gouttelettes séchées à 100°C selon le protocole décrit dans l'exposé de l'invention ci-dessus conformément à l'étape h) du procédé selon l'invention. La poudre récoltée dans un filtre à manche est alors calcinée sous air pendant 5 h à T = 550°C. Le pourcentage volumique en composés non volatils présents dans la suspension avant la deuxième atomisation (étape f) du procédé selon l'invention) est égal à 11,2 %. Le solide est caractérisé par DRX aux bas angles et aux grands angles, par Volumétrie à l'azote, par MET et par MEB. L'analyse MET montre que le matériau final est constitué de nanoparticules d'or piégées dans une matrice d'oxyde de titane à mésoporosité organisée caractérisée par une structure vermiculaire. L'analyse par Volumétrie à l'azote conduit à une surface spécifique du matériau final de S_{BET} = 220 m²/g et à un diamètre mésoporeux caractéristique de la matrice mésostructurée d'oxyde de titane de φ = 2,6 nm. L'analyse DRX aux grands angles conduit à l'obtention du diffractogramme caractéristique des nanoparticules d'or de taille moyenne 19 nm. L'analyse DRX aux petits angles conduit à la visualisation d'un pic de corrélation associé à l'organisation vermiculaire de la matrice mésostructurée. La relation de Bragg donne 2 d * sin (1) = 1,5406, soit d = 4,4 nm. L'épaisseur des parois amorphes de la matrice mésostructurée définie par e = d - φ est donc de e = 1,8 nm. Un cliché MEB des particules élémentaires sphériques ainsi obtenues indique que ces particules ont une taille caractérisée par un diamètre variant de 15 à 100 µm, la distribution en taille de ces particules étant centrée autour de 50 µm.

### Exemple 2 : préparation d'un matériau présentant des nanoparticules d'oxyde de cérium à 8 % poids du matériau final piégées dans une matrice mésostructurée oxyde à base de zirconium et de silicium de rapport molaire Si/Zr = 4 (procédé de préparation selon l'invention).

1,1 kg de ZrCl₄ sont ajoutés très lentement à 7 kg d'éthanol à température ambiante. 7 kg d'H₂O sont alors ajoutés très lentement et sous vigoureuse agitation. On ajoute alors 1,5 kg de CTAB puis toujours très lentement 4 kg de tétraéthylorthosilicate (TEOS). 3 l d'une solution d'oxyde de cérium de concentration 0,3 mol/l (les particules d'oxydes de cérium CeO₂ sont fournies sous forme de solution aqueuse à 60% en masse d'oxyde de cérium par la société Rhodia) sont alors ajoutés à la solution contenant le précurseur inorganique ZrCl₄. La solution ainsi obtenue est atomisé à l'aide d'une buse de pulvérisation "mono-fluide" dans une chambre dans laquelle est envoyé un gaz vecteur, un mélange air sec/azote. Les gouttelettes, obtenues par atomisation, sont séchées à 100°C selon le protocole décrit dans l'exposé de l'invention ci-dessus conformément à l'étape d) du procédé selon l'invention. Les particules sont récoltées dans un filtre à manche. Lesdites particules sont broyées à l'aide d'un broyeur jet d'air et ramenée à quelques µm (de 3 à 5 µm). Une fraction de 30 % poids de ces particules broyées est alors réintroduite dans une solution de même formulation que la solution initiale puis la suspension est à nouveau atomisée à l'aide d'une buse de pulvérisation "mono-fluide" comme précédemment et les gouttelettes séchées à 100°C selon le protocole décrit dans l'exposé de l'invention ci-dessus conformément à l'étape h) du procédé selon l'invention. La poudre récoltée dans un filtre à manche est alors calcinée sous air pendant 5 h à T = 550°C de manière à éliminer le tensioactif CTAB. Le pourcentage volumique en composés non volatils présents dans la suspension dans la suspension avant la deuxième atomisation (étape f) du procédé selon l'invention) est égal à 12,4 %. Le solide est caractérisé par DRX aux bas angles et aux grands angles, par Volumétrie à l'azote, par MET et par MEB et par ICP. L'analyse MET montre que le matériau final est constitué de nanoparticules d'oxyde de cérium dans une matrice SiO₂-ZrO₂ de rapport molaire Si/Zr = 4 à mésoporosité organisée caractérisée par une structure vermiculaire. L'analyse par Volumétrie à l'azote conduit à une surface spécifique du matériau final de S_{BET} = 430 m²/g et à un diamètre mésoporeux caractéristique de la matrice mésostructurée de φ = 2,0 nm. L'analyse DRX aux grands angles conduit à l'obtention du diffractogramme caractéristique des nanoparticules d'oxydes de cérium de taille 3nm. L'analyse DRX aux petits angles conduit à la visualisation d'un pic de corrélation associé à l'organisation vermiculaire de la matrice mésostructurée. La relation de Bragg donne 2 d * sin (1,9) = 1,5406, soit d = 5 nm. L'épaisseur des parois amorphes de la matrice mésostructurée définie par e = d - φ est donc de e = 3 nm. Un cliché MEB des particules élémentaires sphériques ainsi obtenues indique que ces particules ont une taille caractérisée par un diamètre variant de 15 à 100 µm, la distribution en taille de ces particules étant centrée autour de 50 µm.

### Exemple 3 : préparation d'un matériau présentant des nanoparticules polymétalliques CoFe₂O₄ de structure spinelle inverse à 5% poids du matériau final piégées dans une matrice mésostructurée oxyde à base d'aluminium et de silicium de rapport molaire Si/Al = 4 (procédé de préparation selon l'invention)

1,0 kg de AlCl₃, 6H₂O sont ajoutés à une solution contenant 5 kg d'éthanol, 2 kg d'H2O, 36 ml d'HCl et 1,4 kg de P123. Une fois le chlorure d'aluminium dissous, on ajoute à cette solution 3,6 kg de TEOS. 9,5 l d'une solution de nanoparticules de FeCo₂O₄ de concentration 0,03 mol/l dans du 1,2-propanediol, réalisée selon le protocole de la littérature (S. Ammar, A. Helfen, N. Jouini, F. Fiévet, I. Rosenman, F. Villain, P. Molinié, M. Danot, J. Mater. Chem., 2001, 11, 186), sont alors ajoutés. La solution ainsi obtenue est atomisé à l'aide d'une buse de pulvérisation "mono-fluide" dans une chambre dans laquelle est envoyé un gaz vecteur, un mélange air sec/azote. Les gouttelettes, obtenues par atomisation, sont séchées à 100°C selon le protocole décrit dans l'exposé de l'invention ci-dessus conformément à l'étape d) du procédé selon l'invention. Les particules sont récoltées dans un filtre à manche. Lesdites particules sont broyées à l'aide d'un broyeur jet d'air et ramenée à quelques µm (de 3 à 5 µm). Une fraction de 30 % poids de ces particules broyées est alors réintroduite dans une solution de même formulation que la solution initiale puis la suspension est à nouveau atomisée à l'aide d'une buse de pulvérisation "mono-fluide" et les gouttelettes séchées à 100°C selon le protocole décrit dans l'exposé de l'invention ci-dessus conformément à l'étape h) du procédé selon l'invention. La poudre récoltée dans un filtre à manche est alors calcinée sous air pendant 5 h à T = 550°C de manière à éliminer le tensioactif P123. Le pourcentage volumique en composés non volatils présents dans la suspension avant la deuxième atomisation (étape f) du procédé selon l'invention) est égal à 10,6 %. Le solide est caractérisé par DRX aux bas angles et aux grands angles, par Volumétrie à l'azote, par MET, par MEB et par ICP. L'analyse MET montre que le matériau final est constitué de nanoparticules de CoFe₂O₄ piégées dans une matrice aluminosilicate à mésoporosité organisée caractérisée par une structure vermiculaire. L'analyse par Volumétrie à l'azote conduit à une surface spécifique du matériau final de S_{BET} = 300 m²/g et à un diamètre mésoporeux caractéristique de la matrice mésostructurée de φ = 5,6 nm. L'analyse DRX aux grands angles conduit à l'obtention d'un diffractogramme caractéristique des nanoparticules de CoFe₂O₄ de taille 5 nm. L'analyse DRX aux petits angles conduit à la visualisation d'un pic de corrélation associé à l'organisation vermiculaire de la matrice mésostructurée. La relation de Bragg donne 2 d * sin (0,32) = 1,5406, soit d = 13,1 nm. L'épaisseur des parois amorphes de la matrice mésostructurée définie par e = d - φ est donc de e = 7,5 nm. Un cliché MEB des particules élémentaires sphériques ainsi obtenues indique que ces particules ont une taille caractérisée par un diamètre variant de 15 à 100 µm, la distribution en taille de ces particules étant centrée autour de 50 µm.

## Revendications

1. Matériau inorganique constitué d'au moins deux particules sphériques élémentaires, chacune desdites particules sphériques comprenant des nanoparticules métalliques de taille comprise entre 1 et 300 nm et une matrice mésostructurée à base d'oxyde d'au moins un élément X choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme et le mélange d'au moins deux de ces éléments, ladite matrice mésostructurée ayant un diamètre de pores compris entre 1,5 et 30 nm et présentant des parois amorphes d'épaisseur comprise entre 1 et 30 nm, lesdites particules sphériques élémentaires ayant un diamètre D supérieur à 10 µm et inférieur ou égal à 100 µm.

2. Matériau selon la revendication 1 tel que lesdites particules sphériques ont un diamètre D compris entre 11 et 70 µm.

3. Matériau selon la revendication 2 tel que lesdites particules sphériques ont un diamètre D compris entre 11 et 50 µm.

4. Matériau selon la revendication 3 tel que lesdites particules sphériques ont un diamètre D compris entre 15 et 50 µm.

5. Matériau selon l'une des revendications 1 à 4 tel que l'élément X est choisi dans le groupe constitué par le silicium, l'aluminium, le titane, le zirconium, le gallium, le germanium et le cérium et le mélange d'au moins deux de ces éléments.

6. Matériau selon l'une des revendications 1 à 5 tel que le diamètre des pores de ladite matrice est compris entre 1,5 et 10 nm.

7. Matériau selon l'une des revendications 1 à 6 tel que ladite matrice mésostructurée présente une structure hexagonale, cubique, vermiculaire, lamellaire, cholestérique ou bicontinue.

8. Matériau selon l'une des revendications 1 à 7 tel que ladite matrice mésostructurée est à base d'un oxyde de silicium et d'un oxyde d'aluminium ou à base d'un oxyde de silicium et d'un oxyde de zirconium.

9. Matériau selon l'une des revendications 1 à 8 tel que lesdites nanoparticules métalliques comprennent au moins un métal appartenant à la famille des métaux de transition et / ou à la famille des métaux des terres rares.

10. Matériau selon la revendication 9 tel que lesdites nanoparticules métalliques comprennent au moins un métal de transition au degré d'oxydation zéro choisi parmi l'or, le palladium, le platine, le nickel, le cobalt, le cuivre, l'argent, le rhodium, le ruthénium, le fer, l'iridium, leurs mélanges et les alliages dérivés.

11. Matériau selon la revendication 9 tel que lesdites nanoparticules métalliques comprennent au moins un oxyde de métal de transition et/ou au moins un oxyde de métal de terre rare, dans le(s)quel(s) ledit métal est choisi parmi les métaux : Ti, Zr, Nb, Ta, Mo, W, Fe, Co, Cu, Y, La, Ni, Cr, Pd, Pt, Ce, Eu, Nd, Gd et leurs mélanges.

12. Matériau selon la revendication 9 tel que lesdites nanoparticules métalliques comprennent au moins un oxyde polymétallique de structure cristallographique de type spinelle AB₂O₄, perovskite ABO₃ ou ilménite ABO₃, A et/ou B étant au moins un métal de transition et/ou de terre rare.

13. Matériau selon la revendication 9 tel que lesdites nanoparticules métalliques comprennent au moins un chalcogénure formé d'un métal de transition M et d'un élément chalcogène C choisi parmi le soufre, le sélénium et le tellure.

14. Matériau selon l'une des revendications 1 à 13 tel que lesdites nanoparticules métalliques représentent de 0,1 à 30% poids dudit matériau.

15. Matériau selon l'une des revendications 1 à 14 tel que chacune desdites particules sphériques comprend des nanocristaux zéolithiques.

16. Matériau selon la revendication 15 tel que lesdits nanocristaux zéolithiques présentent une ouverture de pores comprise entre 0,2 et 2 nm.

17. Matériau selon la revendication 15 ou la revendication 16 tel que lesdits nanocristaux zéolithiques comprennent au moins une zéolithe choisie parmi les zéolithes de type structural MFI, BEA, FAU et LTA.

18. Matériau selon l'une des revendications 15 à 17 tel que lesdits nanocristaux zéolithiques comprennent au moins une zéolithe entièrement silicique.

19. Matériau selon l'une des revendications 15 à 17 tel que lesdits nanocristaux zéolithiques comprennent au moins une zéolithe contenant du silicium et de l'aluminium.

20. Matériau selon l'une des revendications 1 à 19 tel qu'il présente une surface spécifique comprise entre 100 et 1100 m²/g.

21. Procédé de préparation d'un matériau selon l'une des revendications 1 à 20 comprenant a) la synthèse de particules métalliques de taille nanométrique maximale égale à 300 nm afin d'obtenir une solution colloïdale stable dans laquelle sont dispersées lesdites nanoparticules ; b) le mélange en solution d'au moins un tensioactif, d'au moins un précurseur d'au moins un élément X choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, d'au moins une solution colloïdale stable de nanoparticules métalliques obtenue selon a), et éventuellement d'au moins une solution colloïdale stable dans laquelle sont dispersés des cristaux de zéolithes de taille nanométrique maximale égale à 300 nm ; c) l'atomisation par aérosol de la solution obtenue à l'étape b) en utilisant une buse de pulvérisation qui conduit à la formation de gouttelettes liquides présentant un diamètre inférieur ou égal à 300 µm ; d) le séchage desdites gouttelettes, e) le broyage du produit solide obtenu à l'étape d) ; f) le mélange en solution d'au moins un tensioactif, d'au moins un précurseur d'au moins un élément X choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, d'au moins une solution colloïdale stable de nanoparticules métalliques obtenue selon a), éventuellement d'au moins une solution colloïdale stable dans laquelle sont dispersés des cristaux de zéolithes de taille nanométrique maximale égale à 300 nm et d'au moins une fraction du produit solide obtenu à l'étape e) de manière à former une suspension dans laquelle le pourcentage volumique en composés non volatils est au moins égal à 7 % ; g) l'atomisation par aérosol de la suspension obtenue à l'étape f) en utilisant une buse de pulvérisation conduisant à la formation de gouttelettes de suspension, lesquelles sont précurseurs des particules élémentaires sphériques présentant un diamètre D tel que 10 < D (µm) ≤ 100 constitutives du matériau selon l'invention ; h) le séchage desdites gouttelettes obtenues à l'étape g) et i) l'élimination dudit tensioactif introduit dans les étapes b) et f) pour l'obtention d'un matériau mésostructuré dans lequel sont piégées des nanoparticules métalliques.

## Claims

1. An inorganic material consisting of at least two elementary spherical particles, each one of said spherical particles comprising metallic nanoparticles of size ranging between 1 and 300 nm and a mesostructured matrix based on an oxide of at least one element X selected from the group made up of silicon, aluminium, titanium, tungsten, zirconium, gallium, germanium, tin, antimony, lead, vanadium, iron, manganese, hafnium, niobium, tantalum, yttrium, cerium, gadolinium, europium and neodymium, and the mixture of at least two of these elements, said mesostructured matrix having a pore diameter ranging between 1.5 and 30 nm and having amorphous walls of thickness ranging between 1 and 30 nm, said elementary spherical particles having a diameter D greater than 10 µm and less than or equal to 100 µm.

2. A material as claimed in claim 1, such that said spherical particles have a diameter D ranging between 11 and 70 µm.

3. A material as claimed in claim 2, such that said spherical particles have a diameter D ranging between 11 and 50 µm.

4. A material as claimed in claim 3, such that said spherical particles have a diameter D ranging between 15 and 50 µm.

5. A material as claimed in any one of claims 1 to 4, such that element X is selected from the group made up of silicon, aluminium, titanium, zirconium, gallium, germanium and cerium, and the mixture of at least two of these elements.

6. A material as claimed in any one of claims 1 to 5, such that the pore diameter of said matrix ranges between 1.5 and 10 nm.

7. A material as claimed in any one of claims 1 to 6, such that said mesostructured matrix has a hexagonal, cubic, vermicular, lamellar, cholesteric or bicontinuous structure.

8. A material as claimed in any one of claims 1 to 7, such that said mesostructured matrix is based on a silicon oxide and an aluminium oxide or on a silicon oxide and a zirconium oxide.

9. A material as claimed in any one of claims 1 to 8, such that said metallic nanoparticles comprise at least one metal belonging to the transition metal family and/or to the rare earth metal family.

10. A material as claimed in claim 9, such that said metallic nanoparticles comprise at least one transition metal of zero oxidation degree selected from among gold, palladium, platinum, nickel, cobalt, copper, silver, rhodium, ruthenium, iron, iridium, mixtures and derived alloys thereof.

11. A material as claimed in claim 9, such that said metallic nanoparticles comprise at least one transition metal oxide and/or at least one rare earth metal oxide, wherein said metal is selected from among the following metals: Ti, Zr, Nb, Ta, Mo, W, Fe, Co, Cu, Y, La, Ni, Cr, Pd, Pt, Ce, Eu, Nd, Gd and mixtures thereof.

12. A material as claimed in claim 9, such that said metallic nanoparticles comprise at least one polymetallic oxide with a crystallographic structure of spinel AB₂O₄, perovskite ABO₃ or ilmenite ABO₃ type, A and/or B being at least one transition and/or rare earth metal.

13. A material as claimed in claim 9, such that said metallic nanoparticles comprise at least one chalcogenide made up of a transition metal M and a chalcogen element C selected from among sulfur, selenium and tellurium.

14. A material as claimed in any one of claims 1 to 13, such that said metallic nanoparticles represent 0.1 to 30 wt.% of said material.

15. A material as claimed in any one of claims 1 to 14, such that each one of said spherical particles comprises zeolite nanocrystals.

16. A material as claimed in claim 15, such that said zeolite nanocrystals have a pore opening size ranging between 0.2 and 2 nm.

17. A material as claimed in claim 15 or claim 16, such that said zeolite nanocrystals comprise at least one zeolite selected from among the zeolites of MFI, BEA, FAU and LTA structural type.

18. A material as claimed in any one of claims 15 to 17, such that said zeolite nanocrystals comprise at least one entirely silicic zeolite.

19. A material as claimed in any one of claims 15 to 17, such that said zeolite nanocrystals comprise at least one zeolite containing silicon and aluminium.

20. A material as claimed in any one of claims 1 to 19, such that it has a specific surface area ranging between 100 and 1100 m²/g.

21. A method of preparing a material as claimed in any one of claims 1 to 20, comprising: a) synthesizing metallic particles of maximum nanometric size equal to 300 nm in order to obtain a stable colloidal solution in which said nanoparticles are dispersed ; b) mixing into a solution at least one surfactant, at least one precursor of at least one element X selected from the group made up of silicon, aluminium, titanium, tungsten, zirconium, gallium, germanium, tin, antimony, lead, vanadium, iron, manganese, hafnium, niobium, tantalum, yttrium, cerium, gadolinium, europium and neodymium, at least one stable colloidal solution of metallic nanoparticles obtained according to a), and optionally at least one stable colloidal solution in which zeolite crystals of maximum nanometric size equal to 300 nm are dispersed ; c) aerosol atomizing the solution obtained in stage b) using a spray nozzle that leads to the formation of liquid droplets of diameter less than or equal to 300 µm ; d) drying said droplets ; e) crushing the solid product obtained in stage d) ; f) mixing into a solution at least one surfactant, at least one precursor of at least one element X selected from the group made up of silicon, aluminium, titanium, tungsten, zirconium, gallium, germanium, tin, antimony, lead, vanadium, iron, manganese, hafnium, niobium, tantalum, yttrium, cerium, gadolinium, europium and neodymium, at least one stable colloidal solution of metallic nanoparticles obtained according to a), optionally at least one stable colloidal solution in which zeolite crystals of maximum nanometric size equal to 300 nm are dispersed and at least a fraction of the solid product obtained in stage e) so as to form a suspension in which the volume percentage of non-volatile compounds present is at least 7 %; g) aerosol atomizing the solution obtained in stage f) using a spray nozzle that leads to the formation of suspention droplets, which are precursors of the constituent spherical elementary particles, of diameter D such that 10 < D (µm) ≤ 100, of the material according to the invention ; h) drying said droplets obtained in stage g) and i) removing said surfactant introduced in stages b) and f) so as to obtain a mesostructured material in which metallic nanoparticles are trapped.

## Patentansprüche

1. Anorganisches Material, das aus mindestens zwei kugelförmigen Elementarteilchen, wobei jedes der kugelförmigen Teilchen metallische Nanoteilchen mit einer Größe in Bereich zwischen 1 und 300 nm umfasst und einer mesostrukturierten Matrix auf der Basis eines Oxids mindestens eines Elements X besteht, das ausgewählt ist aus der Gruppe bestehend aus Silicium, Aluminium, Titan, Wolfram, Zirconium, Gallium, Germanium, Zinn, Antimon, Blei, Vanadium, Eisen, Mangan, Hafnium, Niob, Tantal, Yttrium, Cer, Gadolinium, Europium und Neodym und dem Gemisch aus mindestens zwei dieser Elemente, wobei die mesostrukturierte Matrix einen Porendurchmesser im Bereich zwischen 1,5 und 30 nm hat und amorphe Wände mit einer Dicke im Bereich zwischen 1 und 30 nm aufweist, wobei die kugelförmigen Elementarteilchen einen Durchmesser D größer als 10 µm und kleiner als 100 µm haben.

2. Material nach Anspruch 1, wobei die kugelförmigen Teilchen einen Durchmesser D im Bereich zwischen 11 und 70 µm haben.

3. Material nach Anspruch 2, wobei die kugelförmigen Teilchen einen Durchmesser D im Bereich zwischen 11 und 50 µm haben.

4. Material nach Anspruch 3, wobei die kugelförmigen Teilchen einen Durchmesser D im Bereich zwischen 15 und 50 µm haben.

5. Material nach einem der Ansprüche 1 bis 4, wobei das Element X ausgewählt ist aus der Gruppe bestehend aus Silicium, Aluminium, Titan, Zirconium, Gallium, Germanium und Cer und dem Gemisch aus wenigstens zwei dieser Elemente.

6. Material nach einem der Ansprüche 1 bis 5, wobei der Porendurchmesser der Matrix im Bereich zwischen 1,5 und 10 nm liegt.

7. Material nach einem der Ansprüche 1 bis 6, wobei die mesostrukturierte Matrix eine hexagonale, kubische, vermikulare, lamellare, cholesterische oder bikontinuierliche Struktur aufweist.

8. Material nach einem der Ansprüche 1 bis 7, wobei die mesostrukturierte Matrix auf einem Siliciumoxid und einem Aluminiumoxid basiert oder auf einem Siliciumoxid und einem Zirconiumoxid basiert.

9. Material nach einem der Ansprüche 1 bis 8, wobei die metallischen Nanoteilchen mindestens ein Metall umfassen, das zur Familie der Übergangsmetalle und/oder zur Familie der Seltenerdmetalle gehört.

10. Material nach Anspruch 9, wobei die metallischen Nanoteilchen mindestens ein Übergangsmetall mit Oxidationsgrad Null umfassen, das ausgewählt ist aus Gold, Palladium, Platin, Nickel, Cobalt, Kupfer, Silber, Rhodium, Ruthenium, Eisen, Iridium, deren Gemischen und den abgeleiteten Legierungen.

11. Material nach Anspruch 9, wobei die metallischen Nanoteilchen mindestens ein Übergangsmetalloxid und/oder mindestens ein Seltenerdmetalloxid umfassen, bei dem (bei denen) das Metall aus den folgenden Metallen ausgewählt ist: Ti, Zr, Nb, Ta, Mo, W, Fe, Co, Cu, Y, La, Ni, Cr, Pd, Pt, Ce, Eu, Nd, Gd und deren Gemischen.

12. Material nach Anspruch 9, wobei die metallischen Nanoteilchen mindestens ein polymetallisches Oxid mit kristallographischer Struktur vom Typ Spinell AB₂O₄, Perovskit ABO₃ oder Ilmenit ABO₃ umfassen, wobei A und/oder B mindestens ein Übergangs- und/oder Seltenerdmetall ist.

13. Material nach Anspruch 9, wobei die metallischen Nanoteilchen mindestens ein Chalkogenid umfassen, das aus einem Übergangsmetall M und einem Chalkogenelement C gebildet ist, das ausgewählt ist aus Schwefel, Selen und Tellur.

14. Material nach einem der Ansprüche 1 bis 13, wobei die metallischen Nanoteilchen 0,1 bis 30 Gew.-% des Materials darstellen.

15. Material nach einem der Ansprüche 1 bis 14, wobei jedes der kugelförmigen Teilchen zeolithische Nanokristalle umfasst.

16. Material nach Anspruch 15, wobei die zeolithischen Nanokristalle eine Porenöffnung im Bereich zwischen 0,2 und 2 nm aufweisen.

17. Material nach Anspruch 15 oder Anspruch 16, wobei die zeolithischen Nanokristalle mindestens einen Zeolithen umfassen, der ausgewählt ist aus den Zeolithen vom Strukturtyp MFI, BEA, FAU und LTA.

18. Material nach einem der Ansprüche 15 bis 17, wobei die zeolithischen Nanokristalle mindestens einen vollständig silicischen Zeolithen umfassen.

19. Material nach einem der Ansprüche 15 bis 17, wobei die zeolithischen Nanokristalle mindestens einen Zeolithen umfassen, der Silicium und Aluminium enthält.

20. Material nach einem der Ansprüche 1 bis 19, wobei es eine spezifische Oberfläche im Bereich zwischen 100 und 1.100 m²/g aufweist.

21. Verfahren zur Herstellung eines Materials nach einem der Ansprüche 1 bis 20, umfassend a) die Synthese von metallischen Teilchen mit einer maximalen Nanometergröße gleich 300 nm, um eine stabile Kolloidlösung zu erhalten, in der die Nanoteilchen dispergiert sind; b) das Mischen in Lösung mindestens eines grenzflächenaktiven Stoffs, mindestens eines Vorläufers mindestens eines Elements X, ausgewählt aus der Gruppe bestehend aus Silicium, Aluminium, Titan, Wolfram, Zirconium, Gallium, Germanium, Zinn, Antimon, Blei, Vanadium, Eisen, Mangan, Hafnium, Niob, Tantal, Yttrium, Cer, Gadolinium, Europium und Neodym, mindestens einer gemäß a) erhaltenen stabilen Kolloidlösung aus metallischen Nanoteilchen und gegebenenfalls mindestens einer stabilen Kolloidlösung in der Kristalle von Zeolithen mit einer maximalen Nanometergröße gleich 300 nm dispergiert sind; c) die Aerosolzerstäubung der in Schritt b) erhaltenen Lösung unter Verwendung einer Sprühdüse, die zur Bildung von flüssigen Tröpfchen führt, die einen Durchmesser kleiner oder gleich 300 µm aufweisen; d) das Trocknen der Tröpfchen, e) das Zerkleinern des in Schritt d) erhaltenen festen Produkts; f) das Mischen in Lösung mindestens eines grenzflächenaktiven Stoffs, mindestens eines Vorläufers mindestens eines Elements X, ausgewählt aus der Gruppe bestehend aus Silicium, Aluminium, Titan, Wolfram, Zirconium, Gallium, Germanium, Zinn, Antimon, Blei, Vanadium, Eisen, Mangan, Hafnium, Niob, Tantal, Yttrium, Cer, Gadolinium, Europium und Neodym, mindestens einer gemäß a) erhaltenen stabilen Kolloidlösung aus metallischen Nanoteilchen, gegebenenfalls mindestens einer stabilen Kolloidlösung in der Kristalle von Zeolithen mit einer maximalen Nanometergröße gleich 300 nm dispergiert sind; und mindestens einer Fraktion des in Schritt e) erhaltenen festen Produkts, um eine Suspension zu bilden, in der der Volumenprozentsatz an nicht flüchtigen Verbindungen mindestens gleich 7 % ist; g) die Aerosolzerstäubung der in Schritt f) erhaltenen Suspension unter Verwendung einer Sprühdüse, die zur Bildung von Suspensionströpfchen führen, die Vorläufer der kugelförmigen Elementarteilchen sind, die einen Durchmesser D, wie etwa 10<D (µm) ≤ 100 aufweisen, aus denen das Material gemäß der Erfindung besteht; h) das Trocknen der in Schritt g) erhaltenen Tröpfchen und i) das Entfernen des in den Schritten b) und f) eingeführten grenzflächenaktiven Stoffs zum Erhalt eines mesostrukturierten Materials, in dem metallische Nanoteilchen gefangen sind.
